(19) Europäisches Patentamt / European Patent Office / Office européen des brevets

(11) **EP 3 480 334 B1**

(12) **EUROPEAN PATENT SPECIFICATION**

(45) Date of publication and mention
of the grant of the patent:
**20.10.2021 Bulletin 2021/42**

(21) Application number: **17824261.6**

(22) Date of filing: **04.07.2017**

(51) Int Cl.:
*C22C 38/00* (2006.01)     *C21D 1/76* (2006.01)
*C21D 9/46* (2006.01)     *C22C 38/28* (2006.01)
*C22C 38/60* (2006.01)     *H01M 8/12* (2016.01)
*H01M 8/0202* (2016.01)     *C21D 6/00* (2006.01)
*C21D 8/02* (2006.01)     *C22C 38/02* (2006.01)
*C22C 38/04* (2006.01)     *C22C 38/06* (2006.01)
*C22C 38/22* (2006.01)     *C22C 38/24* (2006.01)
*C22C 38/26* (2006.01)     *C22C 38/32* (2006.01)
*H01M 8/021* (2016.01)     *H01M 8/124* (2016.01)

(86) International application number:
**PCT/JP2017/024557**

(87) International publication number:
**WO 2018/008658 (11.01.2018 Gazette 2018/02)**

(54) **FERRITIC STAINLESS STEEL, STEEL SHEET THEREOF, AND METHODS FOR PRODUCING THESE**

FERRITISCHER NICHTROSTENDER STAHL, STAHLBLECH DARAUS UND VERFAHREN ZUR HERSTELLUNG DIESER

ACIER INOXYDABLE FERRITIQUE, SA TÔLE D'ACIER, ET PROCÉDÉS POUR LA PRODUCTION DE CEUX

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.07.2016 JP 2016132585**
**11.11.2016 JP 2016220579**

(43) Date of publication of application:
**08.05.2019 Bulletin 2019/19**

(73) Proprietor: **NIPPON STEEL Stainless Steel Corporation**
**Tokyo 100-0005 (JP)**

(72) Inventors:
• **HATANO, Masaharu**
**Tokyo 100-0005 (JP)**
• **IKEGAMI, Osamu**
**Tokyo 100-0005 (JP)**

(74) Representative: **Vossius & Partner Patentanwälte Rechtsanwälte mbB**
**Siebertstrasse 3**
**81675 München (DE)**

(56) References cited:
WO-A1-2015/108072     WO-A1-2015/108072
JP-A- 2001 316 775     JP-A- 2004 083 972
JP-A- 2011 174 152     JP-A- 2011 174 152
JP-A- 2014 177 659     JP-A- 2014 177 659
JP-A- 2015 096 648

**Description**

FIELD

The present invention relates to ferritic stainless steels that not only retain an oxide film having excellent electrical conductivity in a long-time high temperature oxidative environment but also have creep resistance strength which inhibits material damage, and to methods of producing the same. The present invention also relates to ferritic stainless steel sheets that have both creep resistance strength which inhibits material damage in a high temperature environment and formability and to method of producing the same. The present invention is particularly suitable for separators of solid oxide fuel cells and the peripheral high temperature members thereof.

BACKGROUND

In recent years, the spread of new systems substitutive for conventional power generation systems has been accelerated in the context of problems such as the depletion of fossil fuels as typified by petroleum and the global warming phenomenon due to CO2 emission. Recent interest has focused on "fuel cells" that are one of the new systems and have also high practical value as distributed power supplies and automobile power sources. There are several types of fuel cells, among which solid oxide fuel cells (hereinafter referred to as SOFCs) have higher energy efficiency and promise to be further spread in the future.

Solid electrolyte membranes for SOFCs have been improved in recent years, and the mainstream among them is SOFC systems that operate at an operating temperature of 600 to 900°C. Using temperatures in this range has resulted in considering application of inexpensive metal materials having higher formability in place of expensive ceramics having lower formability.

The characteristics needed by the metal materials are first excellent "oxidation resistance" in a temperature range of 600 to 900°C and next a "thermal expansion coefficient" equivalent to one which ceramic solid oxides have. In addition to these basic characteristics, the metal materials adhered to a ceramic solid oxide need to exhibit favorable "electrical conductivity" for the sake of power generation efficiency at high temperature. In the light of a further spread, however, there is a challenge in application of highly general-purpose metal materials that do not impair the electrical conductivity of the Cr-based oxide film when they are used in an oxidative environment for a long time.

Patent Literature 1 to 5 disclose ferritic stainless steels that have both the above-mentioned oxidation resistance and thermal expansion coefficient. Patent Literature 1 to 3 disclose high Cr types of ferritic stainless steels characterized by containing one or more selected from the group consisting of Y, REM (rare earth element), and Zr. According to the inventions described in these literature documents, adding (Y, REM, and Zr) to a Cr-based oxide film formed on the surface of steel has improved the oxidation resistance and electrical conductivity of the Cr-based oxide film.

In addition, Patent Literature 4, 5, and 7 disclose high Cr types of ferritic stainless steels to which electrical conductivity is imparted without relying on addition of expensive rare earth elements and impairing the oxidation resistance. Patent Literature 4 and 7 are both characterized by addition of Cu, which has high electrical conductivity, without basically needing rare earth elements such as (Y, REM, and Zr). In the light of electrical conductivity, Patent Literature 7 further provides preliminary oxidation that allows an oxide film having Al condensed therein to be formed using Al: 0.03 to 5% and Ti + Nb: 0.1 to 3%. In addition, Patent Literature 5 basically needs addition of Mo: 0.5 to 2%, and is characterized by adjusting the components to 2.5 < Mn/(Si + Al) < 8.0 using Si: 0.15% or less, Mn: 0.3 to 1%, and Al: 1% or less.

As above-mentioned, a high Cr type of ferritic stainless steel used as a metal material for SOFCs has conventionally been improved tentatively in oxidation resistance and electrical conductivity through (1) addition of expensive rare earth elements (Y, REM, Zr, and the like), (2) addition of Cu and/or W, or adjustment of components such as Nb, Ti, Mn, Si, and Al. The former stainless steel poses a considerable problem of general-purpose properties and cost reduction in the context of further spread of SOFCs. The latter stainless steel is unclear with regard to the durability of electrical conductivity in a long-time high temperature oxidative environment.

In recent years, SOFC systems having high energy efficiency have been expected to be extended and spread from household use (0.75 kw) to business use (3 to 5 kw). The separators and peripheral members of SOFCs have an integrated structure called hot module, which is operated continuously in a temperature range of from 500 to 800°C.

When a high Cr type of ferritic stainless steel with no rare earth element added thereto is used for these portions, durability/verification tests on these SOFC systems may result in exhibiting a problem with the above-mentioned durability of electrical conductivity. High Cr types of ferritic stainless steels disclosed in Patent Literature 4, 5, and 7 need to have both electrical conductivity in the oxide film and creep resistance strength, in a long-time high temperature oxidative environment.

In addition, when the high Cr ferritic stainless steel is used in durability/verification tests of SOFC systems for business use that are produced to enlarge power generation systems for household use, it comes up a new problem wherein a slight deformation of about 1% needs to be inhibited at approximately 700°C to 750°C with a view to making improvements in the creep deformation in operation in a high temperature environment, particularly the structural durability.

In addition, aiming at producing a lighter system results in posing a problem of producing a lighter power generation unit constituted by a cell stack in which a plurality of cells are stacked. In this case, ferritic stainless steel sheets used as separator materials require to be thinner. From such a point of view, it is important to secure formability as well as to enhance creep strength for raw materials of ferritic stainless steels. Separators require formability such that they undergo bending, drawing, and bulging to form gas flow passages.

Patent Literature 6 discloses a ferritic stainless steel sheet containing C: 0.02% or less, Si: 2% or less, Mn: 1.5% or less, N: 0.03% or less, Cr: 10 to 30%, one or more of Ti and Nb: the total amount of which is (C+N) to 0.8%, and Al: 0.1% or less, in which reducing the in-plane anisotropy and ridging by controlling the texture of the ferritic stainless steel sheet improves the formability. These Examples are not only limited to the Cr amount of less than 20% but also totally unclear with regard to the above-mentioned high temperature creep strength.

Patent Literature 8 discloses a metal material for members to be electrically charged, which has a feature of allowing a passivated coating to be easily formed with the air thereof, wherein the average distance between local peaks on the roughness curve of the surface of the metal material is 0.3 $\mu$m or less. The metal material is characterized by having favorable corrosion resistance and excellent electrical conductivity at the same time.

In addition, Patent Literature 9 discloses a ferritic stainless steel sheet wherein the size of the {111} orientation colony in the transverse direction of the sheet is 100 to 1000 $\mu$m in the plane perpendicular to the normal to the sheet surface at the center of the sheet thickness, and wherein the ratio of the colony to the whole sheet width is 30 to 95%. The stainless steel sheet is characterized by having excellent ridging resistance (in other words, surface quality obtained after cold rolling) and pressing workability.

In addition, Patent Literature 10 discloses a ferritic stainless steel the oxide film of which has the targeted electrical conductivity and adhesion enhanced by defining the relationship between the Mn amount and the (Si + Al) amount.

In addition, Patent Literature 11 discloses a ferritic stainless steel that is enabled by addition of trace amounts of B, Mg, and Ca and combined addition of Sn to have both creep resistance strength and oxidation resistance to a reformed gas. The ferritic stainless steel disclosed in Patent Literature 11 is characterized in that it takes 50 hours or more for a creep strain thereof to reach 1% at 750°C under an initial stress of 15 MPa.

Patent Literature 12 discloses a ferritic stainless steel in which a 0.1 to 10 $\mu$m thick oxide layer having a mixture of a Nb oxide, a Ti oxide, and an Al oxide exists between the Cr oxide layer and the body material. The ferritic stainless steel disclosed in Patent Literature 12 is characterized by having excellent electrical conductivity and oxidation resistance at high temperature.

Patent Literature 13 discloses a ferritic stainless steel that has excellent oxidation resistance and economically efficiency and is used for fuel reformers. The ferritic stainless steel disclosed in Patent Literature 13 is characterized in that the durability of the Cr-based oxide film is enhanced by carrying out, in a reformed gas environment, optimization of the amounts of Si, Mn, and Nb, addition of trace amounts of V, B, and Mg, and adjustment of the addition amounts of Al and Ti, and without relying on addition of rare earth elements and a large amount of Ni.

However, the ferritic stainless steels disclosed in Patent Literature 8 to 10, 12, and 13 are not aimed at enhanced creep strength nor formability. In this regard, the ferritic stainless steel disclosed in Patent Literature 11 has both enhanced creep resistance strength and oxidation resistance to a reformed gas, but is not aimed at enhancement of the electrical conductivity.

[CITATION LIST]

[PATENT LITERATURE]

[PTL 1] Japanese Patent No. 4310723
[PTL 2] Japanese Patent No. 4737600
[PTL 3] Japanese Patent No. 4385328
[PTL 4] Japanese Patent No. 4675066
[PTL 5] Japanese Patent No. 5716054
[PTL 6] Japanese Patent No. 4166657
[PTL 7] Japanese Patent No. 5377613
[PTL 8] Japanese Unexamined Patent Publication (Kokai) No. 2010-280989
[PTL 9] Japanese Unexamined Patent Publication (Kokai) No. H9-263900

[PTL 10] International Publication No. WO2015/108072
[PTL 11] Japanese Patent No. 6053994
[PTL 12] Japanese Unexamined Patent Publication (Kokai) No. 2011-179063
[PTL 13] International Publication No. WO2015/064739

SUMMARY

[TECHNICAL PROBLEM]

As above-mentioned, a high Cr type of ferritic stainless steel used as a metal material for SOFCs has conventionally been improved tentatively in oxidation resistance and electrical conductivity through (1) addition of expensive rare earth elements (Y, REM, Zr, and the like), (2) addition of Cu and/or W, or adjustment of components such as Nb, Ti, Mn, Si, and Al. In addition, the creep resistance strength and formability of a raw material ferritic stainless steel are important issues for the spread of SOFC systems.

However, conventional technologies have been unclear with regard to whether the texture of a high Cr ferritic stainless steel containing a 20% or more amount of Cr is to be controlled considering creep strength as well as formability.

As above-mentioned, there has not yet occurred, under the current circumstances, a high Cr type ferritic stainless steel sheet that has achieved creep strength and formability which have been brought up as a new problem in taking measures for durability and lighter weight in consideration of the growing size of SOFC power generation systems.

The present invention has been created to solve the above-mentioned problems, and provides: a ferritic stainless steel having both electrical conductivity in the oxide film thereof and creep resistance strength and a ferritic stainless steel sheet having both creep resistance strength and formability, in a long-time high temperature oxidative environment without relying on addition of rare earth elements and alloy elements.

[SOLUTION TO PROBLEM]

The invention is defined in the appended claims.

[ADVANTAGEOUS EFFECTS OF INVENTION]

The present invention can provide: a ferritic stainless steel having both electrical conductivity in the oxide film thereof and creep resistance strength, in a long-time high temperature oxidative environment; and a ferritic stainless steel sheet having both creep resistance strength and formability, in the same environment; wherein both of the steel and the steel sheet are provided without relying on addition of rare earth elements.

BRIEF DESCRIPTION OF DRAWINGS

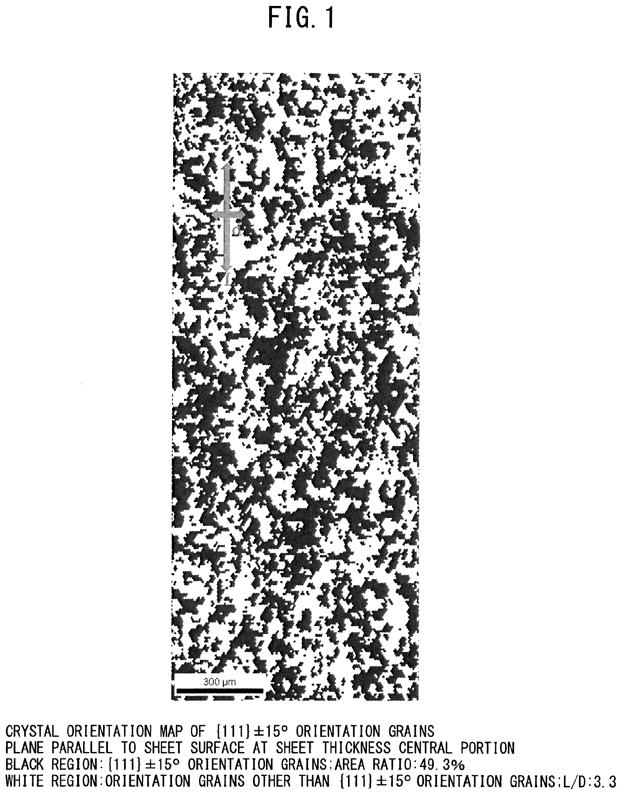

FIG. 1 is a crystal orientation map that is prepared using an EBSD orientation analysis system and that depicts: the {111} ±15° orientation grains the {111} plane orientation of which has an angular difference of 15° or less from the normal direction to a plane that is parallel to the steel sheet surface at the sheet thickness central portion; and orientation grains other than the {111} ±15° orientation grains.

DESCRIPTION OF EMBODIMENTS

To solve the above-mentioned problems, the present inventors have vigorously repeated experiments and studies on a ferritic stainless steel that has not only electrical conductivity needed in a long-time high temperature oxidative environment but also formability and creep resistance strength that inhibits a slight deformation of about 1% caused at approximately 700 to 750°C, and the present inventors have thus completed the present invention. Below, findings obtained in the present invention will be described.

[Findings on Actions and Effects of Texture Parallel to Sheet Surface at Sheet Thickness Central Portion]

(a) In many cases, SOFC systems are usually operated continuously with a high temperature area of the power generation unit at 700 to 750°C. In order to inhibit a slight deformation that poses a problem in operation in a high temperature environment in the context of the growing size of the cell stack and the decreasing thickness of the separator, it is significantly more effective to delay a time it takes for a material creep strain caused at approximately 750°C under a constant load to reach 1% than to increase the high temperature strength and creep breaking life themselves of the material.

(b) The present inventors have made novel findings that the creep strength is remarkably enhanced by controlling: the area ratio of the {111} ±15° orientation grains present in the texture in a plane parallel to the steel sheet surface at the sheet thickness central portion; and the shape ratio of the orientation grains other than the {111} ±15° orientation grains; without relying on addition of alloys such as Nb and Cu which contribute to reinforcement of solid solution generation and precipitation. In this regard, the "sheet thickness central portion" as used herein refers to the center of a steel sheet thickness t, in other words, a region including the position of (1/2)t, preferably a region having a steel thickness of 1/8t in each direction from the center of the sheet thickness t to both faces of the steel sheet. In addition, the "(111) ±15° orientation grains" refer to crystal grains having a crystal orientation such that their {111} plane orientation has an angular difference of 15° or less from the normal direction to a plane that is parallel to the steel sheet surface at the sheet thickness central portion. Although there are still some points unclear with regard to the influence that the texture has on such creep resistance strength, the following inference about the mechanism for enhancing creep resistance strength is drawn on the basis of analysis results obtained by electron backscatter diffraction (hereinafter referred to as EBSD).

(c) In a case where crystal grains at the sheet thickness central portion are classified in terms of the two kinds of grains: the {111} ±15° orientation grains and the crystal grains having a crystal orientation other than the {111} ±15° orientation (hereinafter, crystal grains having a specific crystal orientation are referred to simply as "orientation grains"), the former are orientation grains effective for enhancing formability, but the latter orientation grains act more effectively to enhance creep resistance strength. A result of comparison between the former orientation grains and the latter orientation grains using a crystal orientation map obtained by EBSD in a creep temperature range has revealed that, compared to the former orientation grains, the latter orientation grains become larger within a range in which the orientation difference within the crystal grains is not recognized as a crystal grain boundary (low-angle grain boundary) (in other words, a range of from 1° or more and less than 5°). Owing to this, the latter orientation grains more contribute to an internal stress increase accompanying a rise in dislocation density than the former orientation grains in a creep temperature range.

Furthermore, the shape ratio wherein the latter orientation grains are stretched in the rolling direction allows the above-mentioned action to be actualized and delays the slippage at the crystal grain boundary. In other words, increasing the internal stress due to an increase in dislocation density in the crystal grains and also delaying the slippage at the crystal grain boundary effectively acts in order to delay a time it takes for a creep strain to reach 1%.

From such a point of view, it is significantly effective to have the area ratio of the former orientation grains in a range that affords both formability and creep resistance strength and to increase the shape ratio of the rolling direction of the latter orientation grains to the direction perpendicular to the rolling direction. The latter orientation grains are produced most in the sheet thickness central portion in which steel recrystallization is delayed, and controlling both the texture in the sheet thickness central portion and the above-mentioned shape ratio contributes to achieving both enhancement of creep resistance strength and formability.

(d) In addition, the formability is such that the decreasing thickness of a raw material is more likely to reduce the ductility in the 45° and 90° directions with respect to the rolling direction. Inhibiting such a decrease in ductility secures the formability for the above-mentioned shape of a separator. The decrease in the ductility of a raw material can be inhibited by reducing the area ratio of the {001} ±10° orientation grains out of the latter orientation grains mentioned in item (c). The "{001} orientation grains" refer to crystal grains having a crystal orientation wherein their {001} plane orientation has an angular difference of 10° or less from the normal direction to a plane that is parallel to the sheet surface at the sheet thickness central portion.

(f) In controlling the texture, it is preferable to obtain a recrystallized structure by heat-treating the steel at a temperature lower than the recrystallization temperature of the steel, repeating cold rolling and heat-treatment at 1100°C or less to the steel, and then carrying out finishing heat-treatment at 1000°C or more to the steel.

(g) Furthermore, the present inventors have found out that the control of texture is carried out by adjusting the addition amounts of Nb and Ti and that the additional elements, B, Ga, Mg, and Ca, effectively act on the survival and shape ratio of the latter orientation grains mentioned in the item (c).

As above-mentioned, totally novel findings have been obtained that a high Cr type of ferritic stainless steel having both creep resistance strength and formability suitable for SOFC separators can be obtained by controlling the crystal orientation of the texture in a plane parallel to the steel sheet surface at the sheet thickness central portion without relying on addition of alloy elements. The present invention has been completed on the basis of the above-mentioned results of study.

[Findings on Actions and Effects of Addition of Al, Addition of Additional Elements, B, Ga, Mg, and Ca, and Component Adjustment of Mn, V, Al, and Si]

Furthermore, to solve the above-mentioned problems, the present inventors have vigorously repeated experiments and studies on a ferritic stainless steel that has not only electrical conductivity needed in a long-time high temperature oxidative environment but also creep resistance strength that inhibits a slight deformation of about 1% caused at approximately 700°C. As the result of our experiments and studies, and the present inventors have obtained the following findings.

(a) In many cases, the electrical conductivity of a metal separator is usually evaluated indirectly under accelerated test conditions comparable to 100,000 hours at an SOFC operating temperature of approximately 750°C. In order to inhibit an electrical conductivity reduction which is a technical problem of a metal separator in such a long-time operation, it is significantly effective to reduce the thickness of the Cr-based oxide film containing Cr: 50% or more in terms of atomic % containing O and to reduce the contamination of Si into the Cr-based oxide film, wherein the Cr-based oxide film is formed at 850°C in an air (having a weight absolute humidity of about 2.3% at 20°C) humidified under accelerated test conditions.
(b) The present inventors have found out that the above-mentioned reformation of a Cr-based oxide film is remarkably enhanced by addition of trace amounts of Al, B, Ga, Mg, and Ca without necessarily adding rare earth elements. Furthermore, the present inventors have obtained totally novel findings that it is effective to reduce the contamination of Mn and V from a deoxidizer and a chromium raw material and to adjust the addition amounts of Al and Si. Although there are still many points unclear with regard to such a reformation action of an oxide film, the present inventors infer the below-mentioned mechanism of action on the basis of experimental facts.
(c) Addition of a trace amount of Al reduces oxygen potential in the Cr-based oxide film and a ferrite interface and thus reduces the contamination of Si into the oxide film. Furthermore, B, Ga, Mg, and Ca each binds to C, N, S, or O to form a compound, thereby enhancing the cleanliness of steel and enhancing the protective performance for the Cr-based oxide film. B acts in such a way that B undergoes grain boundary segregation, inhibits excessive grain boundary diffusion of Cr, and delays growth of the Cr-based oxide film. In addition, addition of a suitable amount of Al and reducing the amounts of Mn and V has a large effect of reducing the vapor pressure (volatility) of the Cr-based oxide film and thereby inhibiting defect generation and growth of the Cr-based oxide film.
(d) In addition, in order to inhibit a slight deformation that is a problem of a structure in operation in a high temperature environment, it is significantly more effective to delay a time which it takes for a material creep strain caused at approximately 700°C under a constant load to reach 1% than to increase the high temperature strength and creep breaking life themselves of the material.
(e) The present inventors have found out that the creep strength is remarkably enhanced by adding trace amounts of the above-mentioned elements without relying on addition of Nb, Cu, and the like which contribute to reinforcement of solid solution generation and precipitation. In particular, B and Ga have an action that significantly delays a time it takes for the initial creep strain to reach 1%. These additional elements act so as to cause segregation to delay the slippage at the crystal grain boundary and enhance internal stress accompanying a rise in dislocation density in the crystal grains.
(f) The actions and effects of B and Ga are superimposed on the combined addition of Mg and Ca and addition of trace amounts of Sn and Sb.
(g) The present inventors have also found out that, for the actions and effects that enhance electrical conductivity and creep resistance strength, it is effective to obtain a recrystallized structure by heat-treating a hot rolled steel sheet at a temperature lower than the recrystallization temperature of the steel before cold rolling, and then repeating cold rolling and heat-treatment at 1050°C or less.

As above-mentioned, the present inventors have obtained totally novel findings that new characteristics wherein both creep resistance strength to inhibit a slight deformation of about 1% and an electrical conductivity of a high Cr type of ferritic stainless steel in a long-time high temperature oxidative environment are enhanced can be achieved by addition of a trace amount of Al, addition of additional elements, B, Ga, Mg, and Ca, and component adjustment of Mn, V, Al, and Si. In the present invention, the above-mentioned (1) to (5) have been completed on the basis of the above-mentioned results of study.
Below, the requirements for the present invention will be described in detail. In this regard, the expression "%" for the amount of each element means "mass%".
(I) The reasons why the components of the ferritic stainless steel according to the present invention are defined will be described below.

C is an unavoidable impurity element contained in a steel, inhibits the protective performance for the Cr-based oxide film at which the present invention is aimed, and inhibits the formability and oxidation resistance, but acts effectively for formation of the texture at which the present invention is aimed. Owing to this, C is contained preferably in a suitable amount. In addition, an excessive reduction in C causes a decrease in the creep resistance strength according to the present invention and a significant increase in refining cost. Accordingly, the upper limit is 0.030%. The amount of C is preferably in a range of from 0.002% to 0.020% in the light of the formation and producibility of the texture. It is preferably in a range of from 0.001% to 0.015% in the light of the electrical conductivity and producibility of the Cr-based oxide film.

A lower amount of Si is more preferable in order to secure the formability and electrical conductivity of the Cr-based oxide film at both of which the present invention is aimed. On the other hand, Si also has an action that enhances oxidation resistance and high temperature strength. However, excessive addition causes a decrease in creep resistance strength at which the present invention is aimed. In the light of these basic characteristics, the upper limit is 1.00%. The lower limit is preferably 0.01% in the light of an increase in the production cost of removing unavoidable impurities from a deoxidizer and a chromium raw material. It is preferably in a range of from 0.05% to 0.50%, more preferably in a range of from 0.10% to 0.30%, with a view to achieving both the basic characteristics and production cost at which the present invention is aimed.

In addition, the upper limit is preferably 0.30% with a view to achieving both the electrical conductivity of the Cr-based oxide film and the production cost at both of which the present invention is aimed, and the Si content is preferably in a range of from 0.05% to 0.25%, more preferably in a range of from 0.10% to 0.20%.

Mn not only acts effectively as a deoxidizing element but also has an action that enhances oxidation resistance, and also has an action that enhances the electrical conductivity which the Cr-based oxide film has and at which the present invention is aimed. The lower limit is 0.05% with a view to obtaining these effects. In addition, the upper limit is 0.25% because excessive addition of Mn may inhibit the long-time oxidation resistance of the Cr-based oxide film and inhibit the formability and oxidation resistance. In the light of the formability and basic characteristics at which the present invention is aimed, the Mn content is in a range of from 0.05% to 0.25%, preferably in a range of from 0.10% to 0.25%.

In addition, the upper limit of the Mn content is 0.25% with a view to preventing the long-time oxidation resistance of the Cr-based oxide film from being inhibited. In the light of the electrical conductivity and basic characteristics of the Cr-based oxide film has and at both of which the present invention is aimed, the Mn content is in a range of from 0.05% to 0.25%. It is preferably in a range of from 0.10% to 0.20%.

P is an element that inhibits producibility and weldability, a smaller amount of P is better, and accordingly the upper limit is 0.045%. However, excessive reduction of P leads to an increase in refining cost, and accordingly the lower limit is preferably 0.003%. In the light of producibility and weldability, the content is preferably in a range of from 0.005 to 0.035%, more preferably 0.010 to 0.030%.

S is an unavoidable impurity element contained in a steel, and reduces not only formability but also the electrical conductivity that the Cr-based oxide film has and at which the present invention is aimed. In particular, the presence of Mn-based inclusions and solid solution S not only acts as a starting point that reduces the protective performance for the Cr-based oxide film in a long-time high temperature oxidative environment, but also acts as a starting point that reduces the oxidation resistance in a high temperature oxidative environment. Accordingly, a smaller amount of S is better, and the upper limit is 0.0030%. However, excessive reduction of S leads to an increase in raw material and refining costs, and accordingly the lower limit is 0.0001%. In the light of the basic characteristics and producibility, it is preferably in a range of from 0.0001 to 0.0020%, more preferably 0.0002 to 0.0010%.

Cr is a constituent element that is basic in securing the electrical conductivity of the Cr-based oxide film, creep resistance strength, oxidation resistance, and high temperature characteristics such as a thermal expansion coefficient all of which the present invention is aimed at. In the present invention, 20.0% or less Cr does not allow the targeted high temperature characteristics to be sufficiently secured. Accordingly, the lower limit is 20.0%. However, excessive addition of Cr not only promotes generation of a $\sigma$ phase, which is an embrittlement phase, when the steel is exposed to a high temperature environment, but also promotes Cr evaporation, thereby impairing the electrical conductivity which the Cr-based oxide film has and at which the present invention is aimed, and also may reduce producibility and impair the formability at which the present invention is aimed. The upper limit is 25.0% in the light of the basic characteristics, producibility, and formability at which the present invention is aimed. It is preferably in a range of from 20.0% to 23.0% In the light of cost effectiveness.

As with Cr, Mo is a constituent element that is effective in securing the creep resistance strength and thermal expansion coefficient at both of which the present invention is aimed. In addition, Mo is also a constituent element effective in securing a thermal expansion coefficient which is a requirement for a metal separator according to the present invention. In particular, Mo acts as a solid solution reinforcement element and acts effectively to enhance the creep resistance strength at which the present invention is aimed. To obtain these effects, the lower limit is 0.3%. Excessive addition of Mo not only promotes generation of a $\sigma$ phase, which is an embrittlement phase, but also causes a decrease in producibility and an increase in raw material cost. The upper limit is 2.0% in the light of the high temperature characteristics and producibility at both of which the present invention is aimed. In the light of cost effectiveness, the Mo amount is preferably in a range of from 0.7% to 1.4%.

N is an unavoidable impurity element contained in steel, inhibits the protective performance for the Cr-based oxide film at which the present invention is aimed, and inhibits the formability and oxidation resistance, but acts effectively for formation of the texture at which the present invention is aimed. In addition, an excessive reduction in N causes a decrease in the creep resistance strength according to the present invention and a significant increase in refining cost. Owing to this, N is contained preferably in a suitable amount. Accordingly, the upper limit is 0.040%. The amount of N is preferably in a range of from 0.002% to 0.030% in the light of the formation and producibility of the texture.

Furthermore, in the light of the protective performance for the Cr-based oxide film at which the present invention is aimed, the upper limit is preferably 0.020%, and the N amount is more preferably in a range of from 0.003% to 0.015%.

Al is effective as a strong deoxidizing element, and has an action that enhances the high creep resistance strength and oxidation resistance at both of which the present invention is aimed. The lower limit is preferably 0.01% with a view to obtaining these actions and effects. In addition, the lower limit is preferably 0.05% with a view to securing electrical conductivity by enhancing the long-time oxidation resistance which the Cr-based oxide film has and at which the present invention is aimed.

On the other hand, excessive addition of Al may reduce the electrical conductivity of the Cr-based oxide film, increase the thermal expansion coefficient, and reduce the formability. In the light of these basic characteristics, the upper limit is 0.50%. It is preferably in a range of from 0.03% to 0.30%, more preferably in a range of from 0.05% to 0.25%, with a view to achieving both the creep resistance strength and basic characteristics at both of which the present invention is aimed. In addition, it is preferably in a range of from 0.10% to 0.35%, more preferably 0.15% to 0.25%, with a view to achieving both the oxidation resistance and electrical conductivity which the Cr-based oxide film has and at which the present invention is aimed.

As above-mentioned, a lower amount of V is more preferable to enhance the electrical conductivity which the Cr-based oxide film has and at which the present invention is aimed. On the other hand, V also has an action that fixes C and N in the form of a carbonitride and thereby enhances the oxidation resistance and high temperature strength. In the light of these basic characteristics, the upper limit is 0.20%. The lower limit is preferably 0.005% in the light of an increase in raw material cost considering unavoidable impurities from a chromium raw material. It is preferably in a range of from 0.01% to 0.10%, more preferably in a range of from 0.01% to 0.05%, with a view to achieving both the characteristics and raw material cost at which the present invention is aimed.

Nb and Ti have an action that fixes C and N in the form of a carbonitride and enhances the texture control and creep resistance strength at both of which the present invention is aimed. In addition, Nb and Ti not only have an action that enhances the protective performance for the Cr-based oxide film at which the present invention is aimed, but also have an action that enhances strength needed for members used at high temperature. To obtain these effects, the lower limit is 0.001%. The upper limit is 0.500% because excessive addition increases raw material cost and inhibits the formability. It is preferably in a range of from 0.050% to 0.400%, more preferably in a range of from 0.150% to 0.350%, in the light of cost effectiveness. Nb and Ti may be added singly or in combination.

Alternatively, the stainless steel according to the present invention may further contain, if needed, one or more of Sn: 0.30% or less, Sb: 0.30% or less, Ni: 1.00% or less, Cu: 1.00% or less, W: 1.0% or less, Co: 1.00% or less, B: 0.0100% or less, Ga: 0.0100% or less, Mg: 0.0100% or less, Ca: 0.0100% or less, Zr: 0.10% or less, La: 0.10% or less, Y: 0.10% or less, REM: 0.10% or less, and Ta: 0.10% or less.

As above-mentioned, B, Ga, Mg, and Ca are additive elements effective for texture control at which the present invention is aimed, and are added if needed. On the other hand, excessive addition reduces producibility and the corrosion resistance of the steel. Owing to this, the upper limits for B, Ga, Mg, and Ca are 0.0100%, 0.0100%, and 0.0100%, and 0.0100% respectively. In addition, B and Ga are preferably added in amounts of 0.0003% or more and 0.0005% or more respectively as elements contributing to enhancement of creep resistance strength. More preferably, B is added in a range of from 0.0005% to 0.0030%, and Ga is added in a range of from 0.001% to 0.0050%. The lower limits for Mg and Ca are each preferably 0.0002%. In the light of enhancing the protective performance for the Cr-based oxide film and creep resistance strength according to the present invention, the amounts of Mg and Ca are each preferably in a range of from 0.0005% to 0.0050%, and may be controlled with refining conditions.

(Addition Conditions (a) of B, Ga, Mg, and Ca)

As above-mentioned, B, Ga, Mg, and Ca are additive elements useful to enhance the protective performance for the Cr-based oxide film at which the present invention is aimed, and to thereby express creep resistance strength. On the other hand, excessive addition reduces producibility and the corrosion resistance of the steel. Accordingly, in a case where B, Ga, Mg, and Ca are added, one or more thereof are contained within the upper limits of 0.0050%, 0.0100%, 0.0100%, and 0.0100% respectively, and the amounts of B, Ga, Mg, and Ca may be preferably contained in the ferritic stainless steel for solid oxide fuel cells according to the present invention so as to satisfy Equation (1). However, when the corresponding element is not included, 0 is substituted thereinto.

$$10\,(B + Ga) + Mg + Ca > 0.010 \text{ --- Equation (1)}$$

In particular, in the light of enhancing the creep resistance strength, Equation (1) is in a range of preferably 0.030 or more, more preferably 0.050 to 0.080. In this regard, the upper limit of Equation (1) does not particularly define the upper limit values of the additive elements, and is preferably 0.1% in the light of creep resistance strength and producibility.

(Addition Conditions (b) of Si, Mn, Al, and V)

As above-mentioned, reducing the contamination of Mn and V from a deoxidizer and a chromium raw material and adjusting the addition amounts of Al and Si are effective for enhancement of the protective performance for the Cr-based oxide film. In addition, reduction of Mn and V and addition of a suitable amount of Al have a large effect of reducing the volatility of the Cr-based oxide film and thereby preventing defect from forming and growing the Cr-based oxide film. Accordingly, to obtain the basic characteristics at which the present invention is aimed, the amounts of Al, Si, Mn, and V are in the above-mentioned ranges and preferably further satisfy Equations (2) and (3):

$$Si/(Mn + Al + V) < 0.35 \text{ --- Equation (2)}$$

provided that, when the corresponding element is not contained, 0 is substituted thereinto;

$$0.40 < Al/(Si + Mn + V) < 3.00 \text{ --- Equation (3).}$$

In the light of enhancing the electrical conductivity of the Cr-based oxide film, Equation (2) is preferably less than 0.30, more preferably in a range of from 0.05 to 0.25. Equation (3) is preferably 0.45 or more, more preferably in a range of from 0.50 to 2.50.

Sn, Sb, Ni, Cu, W, and Co are elements effective to enhance the creep resistance strength and corrosion resistance of the steel, and are added if needed. However, excessive addition leads to increasing alloy costs and inhibiting producibility, and thus the upper limits of Sn and Sb are 0.30%, and the upper limits of Ni, Cu, W, and Co are 1.00%. The lower limit amount of each of the elements is more preferably 0.10%.

Zr, REM, and Ta are conventionally elements effective to enhance oxidation resistance and hot workability and enhance the protective performance and electrical conductivity of the Cr-based oxide film, and may be added if needed. However, the effects of adding these elements are not necessarily needed, in view of the technical concept and idea of the present invention and alloy cost reduction. In a case where they are added, it is preferable that the upper limits thereof are each 0.10%, and that the lower limits are each 0.001%. REMs are elements belonging to two elements, Sc and Y, and atomic Nos. 57 to 71, for example, Y, La, Ce, Pr, Nd, and the like. The ferritic stainless steel sheet according to the present invention may contain two or more REMs as long as the total amount of elements belonging to REM is 0.10% or less.

Elements other than those above-described can be contained to the extent that the effects of the present invention are not impaired. Not only the above-mentioned P and S, which are general impurity elements, but also Zn, Bi, Pb, Se, H, Tl, and the like are preferably reduced as much as possible. On the other hand, the content ratios of these elements may be controlled as long as the problems of the present invention are solved, and one or more of 100 ppm or less Zn, 100 ppm or less Bi, 100 ppm or less Pb, 100 ppm or less Se, 100 ppm or less H, and 500 ppm or less Tl may be contained, if needed.

(II) The reasons why the texture of the ferritic stainless steel sheet according to the present invention is defined will be described below.

The ferritic stainless steel sheet according to the present invention is produced from the ferritic stainless steel according to the present invention having the above-mentioned steel components. In addition to the above-mentioned limited conditions of the steel composition, the texture of the sheet thickness central portion of the ferritic stainless steel sheet according to the present invention is specified so as to contribute to achievement of both the creep resistance strength and formability at which the present invention is aimed.

The texture can be analyzed using EBSD, as above-mentioned. EBSD measures/analyzes the crystal orientation of each crystal grain in the micro regions in the surface of a sample at high speed. Crystal orientation groups that contribute to creep resistance strength and formability can be quantified by virtue of displaying a crystal orientation map in which there are two segmented regions: the {111} ±15° orientation grains in the sheet thickness central portion and the orientation grains other than them. For example, an EBSD measurement is made at a magnification ratio of 100× in a measurement region 850 μm in the width direction of the steel sheet and 2250 μm in the rolling direction in a plane parallel to the steel sheet surface at the sheet thickness central portion, and then, as shown in Fig. 1, a crystal orientation map of the crystal grains the {111} plane orientation of which has an angular difference of 15° or less from the normal direction to a plane that is parallel to the steel sheet surface (in other words, the {111} ±15° orientation grains) is displayed, and the area ratio is displayed in the map. In addition, the orientation grains other than the {111} ±15° orientation grains correspond to the white regions in Fig. 1. The shapes of the orientation grains other than the {111} ±15° orientation grains are obtained by steps of displaying the length (L) in the rolling direction and the length (d) in the direction perpendicular to the rolling direction in the form of a histogram using an EBSD orientation analysis system and then adopting the maximum values of the lengths thereof.

The {111} orientation grains are a typical recrystallization texture of a ferritic stainless steel, and has an action that enhances the formability. The {111} orientation grains refer to crystal grains having a crystal orientation wherein the normal direction to a plane parallel to the steel sheet surface has an angular difference of 0° from the direction perpendicular to the {111} plane orientation, in other words, crystal grains whose {111} plane is parallel to the steel sheet surface.

The condition wherein the orientation difference is 15° or less from the {111} plane orientation of the {111} orientation grains is intended for orientation grains falling within a slope of up to ±15° with respect to the {111} plane orientation of the {111} orientation grains. When the plane orientations go beyond the orientation difference of 15°, the orientation grains having the {001} plane orientation and the {101} plane orientation that lead to a decrease in formability fall within in the condition. In addition, the orientation grains other than the {111} ±15° orientation grains act to enhance creep resistance strength. To obtain the creep resistance strength at which the present invention is aimed, the area ratio of the {111} ±15° orientation grains is reduced to less than 60%. However, excessive reduction impairs the formability of raw materials, and hence the lower limit is 30%.

The orientation grains other than the {111} ±15° orientation grains are in the shape of 1.5 < L/d such that they are stretched in the rolling direction so as to be effective to express creep resistance strength. An excessively stretched tissue inhibits formability, and therefore, the orientation grains other than the {111} ±15° orientation grains are made to be in the shape of L/d < 8. To minimize decrease in formability and enhance creep resistance strength, it is preferable that the area ratio of the {111} ±15° orientation grains is >40% and L/d is > 3, and it is more preferable that the area ratio of the {111} ±15° orientation grains is >50% and L/d is >5. L is the average length (μm) of the {111} ±15° orientation grains in the rolling direction, and d is the average length (μm) of the {111} ±15° orientation grains in the direction perpendicular to the rolling direction.

As above-mentioned, the formability at which the present invention is aimed inhibits decrease in stretch in the 45° and 90° directions with respect to the rolling direction. Specifically, for a sheet thickness of 0.5 mm or less, a decrease in stretch in the 45° and 90° directions with respect to the rolling direction is less than 4%, preferably less than 3%, more preferably less than 2%. To achieve this, the {001} ±10° orientation grains acting to reduce formability are preferably less than 10% of the orientation grains other than the {111} ±15° orientation grains, more preferably less than 5%.

(III) Preferable methods of producing the ferritic stainless steel and ferritic stainless steel sheet according to the present invention will be described below.

The ferritic stainless steel according to the present invention is mainly aimed at a cold rolled annealed sheet obtained by annealing a hot rolled steel strip, or carrying out no annealing, descaling, and then cold rolling, followed by finish annealing and descaling. Alternatively, a hot rolled annealed sheet that is not cold rolled may be used. Furthermore, examples of gas pipes include welded pipes produced from a steel sheet. Such pipes are not limited to welded pipes, and may be seamless pipes produced by hot rolling. The above-mentioned finish annealing of steel is preferably carried out at 800 to 1050°C. At less than 800°C, softening and recrystallization of steel are insufficient, and the finish annealing at this temperature range may fail to afford predetermined material characteristics. At more than 1050°C, however, coarse particles are generated and may inhibit the toughness and ductility of the steel.

In the present invention, it is also preferable for enhancing creep resistance strength that a hot rolled steel sheet prior to cold rolling is annealed in a range of Tr - 100 < T < Tr [°C], assuming that the recrystallization temperature of the steel is Tr, and then the steel sheet is finished by repeating cold rolling and heat-treatment at 1050°C or less. In this regard, the recrystallization temperature is a temperature at which new crystal grains are produced from a processed tissue at a recrystallization ratio of 90% or more.

At "Tr - 100°C" or less, insufficient recrystallization of steel remains after finish heat-treatment and inhibits formability. Although more than Tr°C is effective for recrystallization of a hot rolling steel sheet, T < Tr [°C] is more preferable to enhance creep resistance strength based on the metal tissue. Carrying out hot rolled sheet annealing at or near a recrystallization temperature or at less than this temperature causes fine precipitates such as carbosulfide to remain even in heat-treatment at 1100°C or less after cold rolling. The remaining fine precipitates act effectively to enhance the protective performance for the Cr-based oxide film and creep resistance strength at both of which the present invention is aimed, delay the growth of the (111) ±15° orientation grains, and act effectively to form the texture at which the present invention is aimed.

A hot rolled sheet annealing temperature range suitable for obtaining these effects is Tr - 70 < T < Tr - 30 [°C].

It is preferable for enhancing the creep characteristics that finishing heat-treatment is carried out at 1000°C or more after cold rolling which follows annealing of the hot rolled sheet, and that the crystal grains are thus allowed to grow to GS No.8 or more. In this regard, a recrystallization temperature of steel is defined as the lower limit temperature at which a grain size number can be granted in a microscopic test method for crystal grain size in accordance with JIS G 0551 at approximately 1/4 mm in the sheet thickness.

In this regard, neither the conditions for cooling after annealing in a range of Tr - 100 < T < Tr [°C] nor the conditions for cooling after the heat-treatment at 1050°C or below are limited to particular ones. However, a cooling speed higher than air cooling achieves is preferable considering that production is carried out in an industrial continuous annealing furnace in which gas cooling or the like is used.

EXAMPLES

Below, the Examples in the present invention will be described.

[Example 1 of Ferritic Stainless Steel]

Ferritic stainless steel whose components are described in Table 1 was smelted and underwent hot rolling, annealing/pickling, and cold rolling to produce cold rolled steel sheets having a sheet thickness of 0.3 to 2.0 mm (Nos. 1 to 19) under the conditions described in Table 2. In this regard, finish annealing was carried out to all of the sheets at 1050°C or less after cold rolling. Steels I to R are out of the component range defined by the present invention. Test pieces were cut out of these cold rolled steel sheets and used to evaluate the electrical conductivity of the Cr-based oxide film in accordance with an oxidation test and evaluate the creep resistance strength in accordance with a creep test of a sheet form.

[Table 1]

| Steel | Component (mass%) | | | | | | | | | | | | | | | | Equation (1) | Equation (2) | Equation (3) | Others |
|---|---|---|---|---|---|---|---|---|---|---|---|---|---|---|---|---|---|---|---|---|
| | C | Si | Mn | P | S | Cr | Mo | N | Al | V | Nb | Ti | B | Ga | Mg | Ca | | | | |
| A1 | 0.028 | 0.13 | 0.15 | 0.028 | 0.0090 | 24.8 | 1.1 | 0.018 | 0.19 | 0.11 | 0.485 | - | 0.0004 | 0.0008 | 0.0001 | 0.0006 | 0.013 | 0.29 | 0.49 | |
| B1 | 0.008 | 0.28 | 0.16 | 0.019 | 0.0003 | 20.8 | 0.4 | 0.012 | 0.47 | 0.19 | 0.210 | 0.150 | 0.0011 | 0.0025 | 0.0003 | 0.0001 | 0.036 | 0.34 | 0.75 | |
| C1 | 0.011 | 0.06 | 0.10 | 0.025 | 0.0008 | 20.2 | 1.9 | 0.011 | 0.13 | 0.05 | 0.010 | 0.250 | 0.0002 | 0.0005 | 0.0008 | 0.0007 | 0.009 | 0.21 | 0.62 | Sn: 0.02 |
| D1 | 0.006 | 0.04 | 0.02 | 0.019 | 0.0006 | 22.9 | 1.2 | 0.016 | 0.28 | 0.04 | 0.280 | 0.155 | 0.0002 | 0.0021 | 0.0027 | 0.0025 | 0.028 | 0.12 | 2.80 | |
| E1 | 0.003 | 0.09 | 0.28 | 0.035 | 0.0003 | 20.5 | 0.8 | 0.008 | 0.16 | 0.01 | - | 0.455 | 0.0021 | 0.0035 | 0.0003 | 0.0002 | 0.057 | 0.20 | 0.42 | Ta: 0.03 |
| F1 | 0.005 | 0.01 | 0.03 | 0.027 | 0.0019 | 22.2 | 1.3 | 0.011 | 0.05 | 0.04 | 0.330 | 0.005 | 0.0005 | 0.0019 | 0.0011 | 0.0013 | 0.026 | 0.08 | 0.63 | Sb: 0.05, Ni: 0.25 |
| G1 | 0.015 | 0.08 | 0.07 | 0.025 | 0.0002 | 23.2 | 1.6 | 0.012 | 0.21 | 0.03 | 0.005 | 0.280 | 0.0023 | 0.0045 | 0.0002 | 0.0003 | 0.069 | 0.26 | 1.17 | Cu: 0.45, W: 0.2, Co: 0.15, Ce + Nd: 0.15 |
| H1 | 0.013 | 0.11 | 0.09 | 0.012 | 0.0005 | 22.1 | 1.1 | 0.004 | 0.23 | 0.07 | 0.110 | 0.090 | 0.0009 | 0.0023 | 0.0015 | 0.0007 | 0.034 | 0.28 | 0.85 | Zr: 0.02, La: 0.01, Y: 0.01 |
| I1 | 0.012 | 0.12 | 0.19 | 0.015 | 0.0004 | 21.3 | 1.1 | 0.012 | 0.15 | 0.09 | 0.280 | 0.150 | 0.0004 | 0.0004 | 0.0005 | 0.0005 | 0.009 | 0.28 | 0.38 | |
| J1 | 0.012 | 0.10 | 0.09 | 0.021 | 0.0003 | 21.3 | 1.0 | 0.011 | 0.15 | 0.03 | 0.280 | 0.150 | 0.0007 | 0.0004 | 0.0005 | 0.0005 | 0.012 | 0.37 | 0.68 | |
| K1 | 0.008 | 0.32 | 0.28 | 0.018 | 0.0003 | 20.3 | 0.8 | 0.009 | 0.48 | 0.19 | 0.250 | 0.120 | 0.0002 | 0.0020 | 0.0023 | 0.0003 | 0.025 | 0.34 | 0.61 | |
| L1 | 0.014 | 0.08 | 0.14 | 0.022 | 0.0007 | 19.7 | 0.9 | 0.007 | 0.13 | 0.08 | 0.310 | 0.170 | 0.0005 | 0.0020 | 0.0002 | 0.0003 | 0.026 | 0.23 | 0.43 | Sn: 0.02 |

EP 3 480 334 B1

(continued)

| Steel | Component (mass%) | | | | | | | | | | | | | | | | Equation (1) | Equation (2) | Equation (3) | Others |
|---|---|---|---|---|---|---|---|---|---|---|---|---|---|---|---|---|---|---|---|---|
| | C | Si | Mn | P | S | Cr | Mo | N | Al | V | Nb | Ti | B | Ga | Mg | Ca | | | | |
| M1 | 0.015 | 0.09 | 0.32 | 0.020 | 0.0007 | 20.3 | 1.1 | 0.015 | 0.19 | 0.05 | 0.150 | 0.180 | 0.0005 | 0.0020 | 0.0011 | 0.0007 | 0.027 | 0.16 | 0.41 | Cu: 0.45, W: 0.2, Co: 0.15 |
| N1 | 0.011 | 0.11 | 0.20 | 0.020 | 0.0105 | 20.4 | 1.3 | 0.011 | 0.21 | 0.09 | 0.160 | 0.230 | 0.0004 | 0.0020 | 0.0015 | 0.0007 | 0.026 | 0.22 | 0.53 | |
| O1 | 0.033 | 0.13 | 0.12 | 0.030 | 0.0007 | 21.2 | 1.1 | 0.009 | 0.18 | 0.10 | 0.280 | - | 0.0005 | 0.0020 | 0.0013 | 0.0007 | 0.027 | 0.33 | 0.51 | Sb: 0.01 |
| P1 | 0.025 | 0.09 | 0.11 | 0.030 | 0.0007 | 20.8 | 0.2 | 0.011 | 0.17 | 0.13 | 0.310 | 0.250 | 0.0002 | 0.0015 | 0.0005 | 0.0005 | 0.018 | 0.22 | 0.52 | |
| Q1 | 0.012 | 0.21 | 0.12 | 0.021 | 0.0005 | 20.5 | 1.1 | 0.015 | 0.52 | 0.09 | 0.290 | - | 0.0002 | 0.0020 | 0.0011 | 0.0007 | 0.024 | 0.29 | 1.24 | |
| R1 | 0.009 | 0.12 | 0.13 | 0.019 | 0.0003 | 20.2 | 1.1 | 0.022 | 0.16 | 0.14 | 0.270 | - | 0.0005 | 0.0035 | 0.0022 | 0.0011 | 0.043 | 0.28 | 0.41 | |
| S1 | 0.008 | 1.02 | 0.30 | 0.020 | 0.0005 | 20.5 | 0.9 | 0.011 | 0.45 | 0.18 | 0.24 | 0.110 | 0.0003 | 0.0030 | 0.0018 | 0.0004 | 0.035 | 1.10 | 0.30 | |
| T1 | 0.001 | 0.45 | 1.03 | 0.021 | 0.0004 | 20.3 | 0.9 | 0.010 | 0.46 | 0.17 | 0.25 | 0.100 | 0.0003 | 0.0025 | 0.0020 | 0.0005 | 0.031 | 0.27 | 0.28 | |
| (Note 1) Equation (1): 10(B + Ga) + Mg + Ca, (Note 2) Equation (2): Si/(Mn + Al + V), (Note 3) Equation (3): Al/(Si + Mn + V) | | | | | | | | | | | | | | | | | | | | |

An oxidation test was carried out by holding each of the cold rolled steel sheets (Nos. 1 to 19) for 100 hours in an air humidified so as to have a weight absolute humidity of about 2.3% at 20°C and heated at 850°C, and then cooling the steel sheet to room temperature. A Pt mesh was baked on the surface of the oxidation test piece, and the electrical conductivity of the Cr-based oxide film was measured using a four-terminal method. Specifically, the oxidation test piece was inserted in a muffle furnace and heated to 750°C; then the voltage drop value ($\Delta V$) was measured when the test piece was electrically charged (I); the contact resistance ($R = \Delta V/I$) was determined; and the contact resistivity ($\rho = R \times S$, S: electrically charged area) was calculated and used as an evaluation index of electrical conductivity. The contact resistivity ($\Omega \cdot m^2$) was rated as "o", "Excellent", and "x" when it was equivalent to, lower than, and higher than, respectively, a range of from 0.5 to $1.0 \times 10^{-3}$ $\Omega \cdot m^2$ which was measured on the same conditions as the above-mentioned oxidation test with a commercially available ferritic alloy Crofer22APU (a 22% Cr steel with rare earth elements added thereto) for SOFC interconnectors. In this regard, "o" and "Excellent" apply to the electrical conductivity at which the present invention is aimed.

It is possible to determine the thickness having 50% or more Cr in terms of atomic % and the maximum Si concentration in the oxide film by virtue of applying a glow discharge spectroscopy method (GDS analysis method) to the surface oxide film formed in the oxidation test. Steel constituent elements, Fe, Cr, Si, Mn, Al, Nb, Ti, Mo, and V, together with light elements such as O and C, were measured for the profile of each element in the depth direction below the surface. For this purpose, C was removed, the profile of elements to be detected containing O was prepared, and then the thickness containing 50% or more Cr in terms of atomic % and the maximum Si concentration in the oxide film were determined.

As the creep test, a constant load test in accordance with JIS Z 2271 was carried out using a sheet-shaped test piece having a parallel portion width of 10 mm and a length of 35 mm The test conditions were 700°C and an initial stress of 20 MPa, and a time it took for a creep strain of the test piece to reach 1% was measured to evaluate the creep resistance strength related to slight high temperature deformation which is a problem to be solved by the present invention. The creep resistance strength was rated as "x", "o", and "Excellent" for less than 2500 hours, 2500 hours or more, and more than 3000 hours respectively as a time it took for a creep strain of the test piece to reach 1%. In this regard, "o" and "Excellent" apply to the creep resistance strength at which the present invention is aimed.

[Table 2]

| No. | Steel | Hot Rolled Sheet Annealing (°C) | | | Cr-based Oxide Film | | | Creep Resistance Strength | Remarks |
|---|---|---|---|---|---|---|---|---|---|
| | | Tr | Equation (4) | Temperature | Electrical Conductivity | Thickness Containing Cr ≥50% | Maximum Si Concentration | | |
| 1 | A1 | 1030 | 930 to 1030 | 980 | o | 1.8 | 1.1 | o | Example |
| 2 | B1 | 980 | 880 to 980 | 990 | o | 1.5 | 1.6 | o | Example |
| 3 | B1 | 980 | 880 to 980 | 890 | o | 1.5 | 1.5 | Excellent | Example |
| 4 | C1 | 940 | 840 to 940 | 920 | Excellent | 0.8 | 0.8 | Excellent | Example |
| 5 | D1 | 1000 | 900 to 1000 | 950 | o | 1.3 | 0.3 | o | Reference Example |
| 6 | E1 | 980 | 880 to 980 | 990 | o | 1.2 | 0.7 | Excellent | Reference Example |
| 7 | F1 | 1000 | 900 to 1000 | 970 | Excellent | 0.9 | 0.1 | o | Reference Example |
| 8 | G1 | 1010 | 910 to 1010 | 1020 | o | 1.3 | 0.7 | Excellent | Example |
| 9 | H1 | 1000 | 900 to 1000 | 1050 | o | 0.8 | 1.0 | o | Example |
| 10 | I1 | 990 | 890 to 990 | 950 | x | 2.1 | 2.1 | x | Comparative Example |
| 11 | J1 | 990 | 890 to 990 | 950 | x | 2.2 | 2.2 | o | Comparative Example |
| 12 | K1 | 980 | 880 to 980 | 930 | o | 1.9 | 1.7 | o | Reference Example |
| 13 | L1 | 960 | 860 to 960 | 910 | x | 2.4 | 1.3 | o | Comparative Example |
| 14 | M1 | 980 | 880 to 980 | 930 | o | 1.8 | 1.6 | o | Reference Example |

EP 3 480 334 B1

(continued)

| No. | Steel | Hot Rolled Sheet Annealing (°C) | | | Cr-based Oxide Film | | | Creep Resistance Strength | Remarks |
| | | Tr | Equation (4) | Temperature | Electrical Conductivity | Thickness Containing Cr $\geq 50\%$ | Maximum Si Concentration | | |
|---|---|---|---|---|---|---|---|---|---|
| 15 | N1 | 980 | 880 to 980 | 920 | x | 2.4 | 2.1 | o | Comparative Example |
| 16 | O1 | 990 | 890 to 990 | 890 | x | 2.5 | 2.1 | o | Comparative Example |
| 17 | P1 | 980 | 880 to 980 | 930 | x | 2.3 | 1.6 | x | Comparative Example |
| 18 | Q1 | 980 | 880 to 980 | 930 | x | 1.6 | 2.1 | o | Comparative Example |
| 19 | R1 | 980 | 880 to 980 | 990 | o | 1.8 | 1.8 | o | Example |
| 20 | S1 | 980 | 880 to 980 | 960 | x | 2.2 | 2.4 | o | Comparative Example |
| 21 | T1 | 980 | 880 to 980 | 960 | x | 2.3 | 1.8 | o | Comparative Example |

(Note 4) Tr: Recrystallization Temperature [°C]
(Note 5) Equation (4): "Tr - 100" to Tr [°C]
(Note 6) Electrical Conductivity of Cr-based Oxide Film: Contact Resistivity at 750°C is lower (Excellent), equal (o), or higher (x), compared to that of Crofer22APU.
(Note 7) Time it takes for Creep Strain to reach 1% at 700°C under 20 MPa: more than 3000 hours (Excellent), 2500 hours or more (o), less than 2500 hours (x)

The obtained results are described together in Table 2. Nos. 1 to 9 satisfied the components defined in the present invention, and were rated as "o" or "Excellent" in the evaluation of the electrical conductivity and creep resistance strength at both of which the present invention is aimed. Among these, Nos. 4 and 7 satisfied both Equation (2) and Equation (3) in a more preferable range according to the present invention, expressed the remarkable effect of enhancing electrical conductivity, and thus were rated as "Excellent". Furthermore, Nos. 6 and 8 satisfied Equation (1) in a more preferable range according to the present invention, and the creep resistance strength was rated as "Excellent". In addition, the creep resistance strength evaluation of Nos. 3 and 4 was enhanced from "o" to "Excellent" by carrying out a preferable production method according to the present invention even though they didn't satisfy Equation (1) in a more preferable range.

Steel Nos. 10, 11, 13, 15 to 18, 20, and 21 each failed in satisfying the steel composition range defined in the present invention or failed in satisfying one or more of Equations (1) to (3) defined in the present invention. Although these steels were produced by carrying out a preferable production method defined in the present invention, these steels failed to achieve, at the same time, the electrical conductivity and creep resistance strength at both of which the present invention is aimed, and were rated as "x" in the evaluation of either of them.

The above-mentioned results have revealed that the electrical conductivity is remarkably enhanced by carrying out addition and component adjustment of additional elements and thereby allowing depth containing 50% or more of Cr in terms of atomic % to be less than 2 $\mu$m from the surface and to have the maximum Si concentration of less than 2% in terms of atomic %. For creep resistance strength, it is significantly effective to carry out a preferable production method with the values for Equation (1) equal to 0.050 or more, further 0.030 or more.

[Example 2 of Ferritic Stainless Steel Sheet]

Ferritic stainless steel whose components are described in Table 3 was smelted and underwent hot rolling, annealing/pickling, and cold rolling to produce cold rolled steel sheets having a sheet thickness of 0.2 to 0.6 mm under the conditions described in Table 4. In this regard, finish annealing was carried out in a range of from 1000 to 1050°C after cold rolling. Steels K to R are out of the component range defined by the present invention. Test pieces were cut out of these cold rolled steel sheets and used to analyze the texture in accordance with EBSD, evaluate the creep resistance strength in accordance with a creep test of a sheet form, and evaluate the mechanical property in accordance with the JIS No. 13 tensile test.

[Table 3]

| Steel No. | Component (mass%) | | | | | | | | | | | | | Equation (1) | Equation (2) | Equation (3) |
|---|---|---|---|---|---|---|---|---|---|---|---|---|---|---|---|---|
| | C | Si | Mn | P | S | Cr | Mo | N | Al | Nb | Ti | V | Others | | | |
| A2 | 0.028 | 0.13 | 0.15 | 0.028 | 0.0009 | 24.8 | 1.1 | 0.018 | 0.19 | 0.485 | 0.20 | 0.11 | B:0.004, Ga: 0.0008, Mg: 0.001, Ca: 0.006 | 0.049 | 0.29 | 0.49 |
| B2 | 0.008 | 0.28 | 0.46 | 0.019 | 0.0003 | 20.8 | 0.4 | 0.022 | 0.47 | 0.21 | 0.15 | 0.19 | B:0.0021,Ga: 0.0025, Mg: 0.003, Ca: 0.001 | 0.051 | 0.25 | 0.51 |
| C2 | 0.011 | 0.46 | 0.15 | 0.025 | 0.0008 | 20.2 | 1.8 | 0.021 | 0.13 | 0.01 | 0.35 | 0.05 | Sn:0.02 | 0.000 | 1.39 | 0.20 |
| D2 | 0.006 | 0.14 | 0.95 | 0.022 | 0.0005 | 22.4 | 1.2 | 0.012 | 0.06 | 0.31 | 0.115 | 0.04 | | 0.000 | 0.13 | 0.05 |
| E2 | 0.003 | 0.29 | 0.28 | 0.035 | 0.0003 | 20.5 | 0.8 | 0.038 | 0.16 | - | 0.465 | 0.01 | Ta:0.03 | 0.000 | 0.64 | 0.28 |
| F2 | 0.005 | 0.01 | 0.03 | 0.027 | 0.0019 | 22.2 | 1.3 | 0.021 | 0.05 | 0.33 | 0.005 | 0.04 | B:0.0005, Ga: 0.0019, Mg: 0.0011, Ca: 0.0013, Sb: 0.05, Ni:0.25 | 0.026 | 0.08 | 0.63 |
| G2 | 0.015 | 0.08 | 0.03 | 0.025 | 0.0002 | 23.2 | 1.6 | 0.022 | 0.21 | 0.005 | 0.28 | 0.03 | B:0.0023, Ga: 0.0045, Mg: 0.0002, Ca: 0.0003, Cu: 0.45,W:0.2, Co: 0.15 | 0.069 | 0.30 | 1.50 |
| H2 | 0.013 | 0.96 | 0.09 | 0.012 | 0.0005 | 22.1 | 1.1 | 0.003 | 0.23 | 0.11 | 0.09 | 0.07 | Zr:0.02, La: 0.01,Y:0.01 | 0.000 | 2.46 | 0.21 |
| I2 | 0.012 | 0.21 | 0.19 | 0.015 | 0.0004 | 21.8 | 1.1 | 0.013 | 0.07 | 0.28 | 0.125 | 0.09 | B:0.0015, Ga: 0.0030 | 0.045 | 0.60 | 0.14 |
| J2 | 0.008 | 0.18 | 0.24 | 0.021 | 0.0003 | 22.3 | 1.0 | 0.014 | 0.05 | 0.305 | 0.115 | 0.03 | B:0.0008, Ga: 0.0025, Mg: 0.0025, Ca: 0.0035 | 0.039 | 0.56 | 0.11 |

(continued)

| Steel No. | Component (mass%) | | | | | | | | | | | | | Equation (1) | Equation (2) | Equation (3) |
|---|---|---|---|---|---|---|---|---|---|---|---|---|---|---|---|---|
| | C | Si | Mn | P | S | Cr | Mo | N | Al | Nb | Ti | V | Others | | | |
| K2 | 0.008 | 1.02 | 0.28 | 0.018 | 0.0003 | 20.3 | 0.8 | 0.019 | 0.48 | 0.25 | 0.12 | 0.19 | | 0.000 | 1.07 | 0.32 |
| L2 | 0.014 | 0.08 | 0.14 | 0.022 | 0.0007 | 19.7 | 0.9 | 0.027 | 0.13 | 0.31 | 0.17 | 0.08 | Sn:0.02 | 0.000 | 0.23 | 0.43 |
| M2 | 0.015 | 0.09 | 1.03 | 0.02 | 0.0007 | 20.3 | 1.1 | 0.015 | 0.19 | 0.15 | 0.18 | 0.05 | Cu:0.45, W:0.2, Co:0.15 | 0.000 | 0.07 | 0.16 |
| N2 | 0.011 | 0.11 | 0.2 | 0.02 | 0.0105 | 20.4 | 1.3 | 0.031 | 0.21 | 0.16 | 0.23 | 0.09 | | 0.000 | 0.22 | 0.53 |
| O2 | 0.033 | 0.13 | 0.12 | 0.03 | 0.0007 | 21.2 | 1.1 | 0.019 | 0.18 | 0.28 | - | 0.10 | Sb:0.01 | 0.000 | 0.33 | 0.51 |
| P2 | 0.025 | 0.09 | 0.11 | 0.03 | 0.0007 | 20.8 | 0.2 | 0.021 | 0.17 | 0.31 | 0.25 | 0.13 | | 0.000 | 0.22 | 0.52 |
| Q2 | 0.012 | 0.21 | 0.12 | 0.021 | 0.0005 | 20.5 | 1.1 | 0.025 | 0.52 | 0.29 | - | 0.09 | | 0.000 | 0.29 | 1.24 |
| R2 | 0.009 | 0.12 | 0.13 | 0.019 | 0.0003 | 20.2 | 1.1 | 0.042 | 0.16 | 0.27 | - | 0.14 | | 0.000 | 0.28 | 0.41 |
| S2 | 0.027 | 0.07 | 0.15 | 0.028 | 0.002 | 24.6 | 1.1 | 0.018 | 0.15 | 0.49 | 0.15 | 0.05 | B:0.0015, Ca: 0.0035 | 0.019 | 0.20 | 0.56 |
| T2 | 0.009 | 0.41 | 0.65 | 0.025 | 0.0008 | 20.2 | 1.8 | 0.021 | 0.48 | 0.01 | 0.35 | 0.06 | Ga:0.008, Mg: 0.003, La:0.02, REM:0.05 | 0.083 | 0.34 | 0.43 |
| U2 | 0.008 | 0.22 | 0.35 | 0.019 | 0.0003 | 20.8 | 0.4 | 0.022 | 0.28 | 0.21 | 0.15 | 0.04 | Mg:0.005, Ca: 0.006, Cu:0.25, Co:0.25 | 0.011 | 0.33 | 0.46 |
| V2 | 0.005 | 0.02 | 0.05 | 0.027 | 0.0019 | 22.2 | 0.7 | 0.021 | 0.04 | 0.33 | 0.005 | 0.02 | B:0.0025, Ga: 0.0015, Sn: 0.03, Ni:0.35 | 0.040 | 0.18 | 0.44 |
| (Note 1) Equation (1): 10(B + Ga) + Mg + Ca, (Note 2) Equation (2): Si/(Mn + Al + V), (Note 3) Equation (3): Al/(Si + Mn + V) | | | | | | | | | | | | | | | | |

[Table 4]

| No. | Steel | Recrystallization Temperature Tr (°C) | Equation (a) (°C) | Hot Rolled Sheet Annealing (°C) | Finish Annealing (°C) | Texture | | | Creep Resistance Strength | formability | Remarks |
|---|---|---|---|---|---|---|---|---|---|---|---|
| | | | | | | (111) ±15° (%) | L/d | (001) ±10° (%) 10° | | | |
| 1 | A2 | 1040 | 940 to 1040 | 1030 | 1020 | 35 | 2.5 | (001) ±11 (%) | o | o | Example |
| 2 | B2 | 980 | 880 to 980 | 970 | 1000 | 38 | 2.8 | 10 | o | o | Reference Example |
| 3 | | | | 1040 | 1020 | 65 | 1.0 | 1.1 | x | Excellent | Comparative Example |
| 4 | C2 | 960 | 860 to 960 | 950 | 1000 | 45 | 3.5 | 7 | o | o | Example |
| 5 | D2 | 990 | 890 to 990 | 940 | 1000 | 48 | 3.2 | 3 | o | Excellent | Reference Example |
| 6 | E2 | 980 | 880 to 980 | 960 | 1000 | 49 | 3.5 | 5 | o | o | Reference Example |
| 7 | F2 | 980 | 880 to 980 | 960 | 1000 | 46 | 3.6 | 7 | o | o | Reference Example |
| 8 | G2 | 970 | 870 to 970 | 950 | 1020 | 49 | 3.7 | 9 | o | o | Reference Example |
| 9 | H2 | 950 | 850 to 950 | 940 | 1050 | 42 | 3.5 | 11 | o | o | Example |
| 10 | | | | 830 | 980 | 28 | 7.5 | 15 | o | x | Comparative Example |
| 11 | I2 | 990 | 890 to 990 | 930 | 1030 | 55 | 5.1 | 3 | Excellent | Excellent | Example |
| I2 | J2 | 1000 | 900 to 1000 | 950 | 1040 | 58 | 5.5 | 2 | Excellent | Excellent | Example |
| 13 | K2 | 970 | 870 to 970 | 960 | 1000 | 35 | 2.5 | 11 | x | x | Comparative Example |
| 14 | L2 | 980 | 880 to 980 | 970 | 1000 | 38 | 2.2 | 9 | x | o | Comparative Example |
| 15 | M2 | 960 | 860 to 960 | 950 | 1000 | 33 | 2.3 | 10 | o | x | Comparative Example |

20

(continued)

| No. | Steel | Recrystallization Temperature Tr (°C) | Equation (a) (°C) | Hot Rolled Sheet Annealing (°C) | Finish Annealing (°C) | Texture | | | Creep Resistance Strength | formability | Remarks |
|---|---|---|---|---|---|---|---|---|---|---|---|
| | | | | | | (111) ±15° (%) | L/d | (001) ±10° (%) 10° | | | |
| 16 | N2 | 960 | 860 to 960 | 940 | 1000 | 32 | 2.4 | 11 | o | x | Comparative Example |
| 17 | O2 | 990 | 890 to 990 | 980 | 1000 | 33 | 2.5 | 11 | o | x | Comparative Example |
| 18 | P2 | 1000 | 900 to 1000 | 980 | 1000 | 39 | 2.3 | 3 | x | x o | Comparative Example |
| 19 | Q2 | 980 | 880 to 980 | 970 | 1000 | 34 | 2.4 | 9 | o | x | Comparative Example |
| 20 | R2 | 980 | 880 to 980 | 970 | 1000 | 32 | 2.6 | 9 | o | x | Comparative Example |
| 21 | S2 | 1020 | 920 to 1020 | 980 | 1020 | 32 | 2.4 | 12 | o | o | Example |
| 22 | T2 | 950 | 850 to 950 | 860 | 1030 | 40 | 3.3 | 3 | Excellent | Excellent | Reference Example |
| 23 | U2 | 980 | 880 to 980 | 900 | 1010 | 39 | 2.7 | 10 | o | o | Reference Example |
| 24 | V2 | 990 | 890 to 990 | 900 | 1030 | 40 | 3.2 | 3 | Excellent | Excellent | Example |

(Note 1) Tr: Recrystallization Temperature [°C] (Note 2) Equation (a): "Tr - 100" to Tr [°C] (Note 3) {111}±15°/%: Area Ratio of {111} ±15° Orientation Grains (Note 4) L/d: Shape of Orientation Grains other than {111} ± 15° Orientation Grains, L: Average Length of Orientation Grains in Rolling Direction, d: Average Length of Orientation Grains in Direction Perpendicular to Rolling Direction (Note 5) {001} ±10°/%: Area Ratio of {001} ±10° Orientation Grains (Note 6) formability: Difference from Minimum of Elongation in 45° Direction and 90° Direction with respect to the rolling direction: 4% or more (x), less than 4% (o), less than 2% (Excellent) (Note 7) Time it takes for Creep Strain to reach 1% at 700°C under 15 MPa: more than 1500 hours (Excellent), 1000 hours or more (o), less than 100 hours (x)

As above-mentioned, the texture was analyzed by EBSD to display a crystal orientation map of the {111} ±15° orientation grains in a plane parallel to the steel surface at the sheet thickness central portion and determine the area ratio of the {111} ±15° orientation grains and the shape of the orientation grains other than the {111} ±15° orientation grains (L/d). Furthermore, a crystal orientation map of the {001} ±10° orientation grains was displayed to determine the area ratio of the orientation grains.

As the creep test, a constant load test in accordance with JIS Z 2271 was carried out using a sheet-shaped test piece having a parallel portion width of 10 mm and a length of 35 mm. The test conditions were 750°C and an initial stress of 15 MPa, and a time it took for a creep strain of the test piece to reach 1% was measured to evaluate the creep resistance strength related to slight high temperature deformation which is a problem to be solved by the present invention. The creep resistance strength was rated as "x", "o", and "Excellent" for less than 1000 hours, 1000 hours or more, and more than 1500 hours respectively as a time it took for a creep strain of the test piece to reach 1%. In this regard, "o" and "Excellent" apply to the creep resistance strength at which the present invention is aimed.

In the tensile test, JIS No. 13B test pieces having a width of 12.5 mm and a length of 50 mm, wherein the width was parallel to the 45° direction and the 90° direction with respect to the rolling direction, were used. The tensile strength and elongation were measured in accordance with the test conditions in JIS Z 2241. The elongation was rated as "x", "o", and "Excellent" for 4% or more, less than 4%, and less than 2% respectively as a difference from the minimum value of the 45° direction elongation and the 90° direction elongation with respect to the rolling direction. In this regard, "o" and "Excellent" apply to the formability at which the present invention is aimed.

The obtained results are described together in Table 4. Nos. 1, 2, 4 to 9, 11, 12, and 21 to 24 satisfied both the components and texture defined in the present invention, and were rated as "o" or "Excellent" in the evaluation of the creep resistance strength and formability at both of which the present invention is aimed. Among these, Nos. 11 and 12 are the cases in which a more preferable texture control at which the present invention is aimed was satisfied by both adding preferable additional elements and carrying out a more suitable production method, and they expressed the remarkable effect of enhancing the creep resistance strength and formability, and thus were rated as "Excellent". Furthermore, No. 5 is the case in which the formability was enhanced to "Excellent" by reducing the amounts of C and N.

Nos. 3 and 10 satisfied the steel components defined in the present invention, but did not obtain the texture at which the present invention is aimed, and thus were rated as "x" in the evaluation of either the creep resistance strength or formability. No. 3 revealed that when the hot rolled sheet annealing temperature was excessively high (Tr > 50 [°C]), the produced ferritic stainless steel did not have the texture at which the present invention is aimed, and did not have creep resistance strength at which the present invention is aimed,. In addition, No. 10 revealed that when the hot rolled sheet annealing temperature was excessively low (Tr < 100 [°C]), the produced ferritic stainless steel did not have the texture at which the present invention is aimed, and did not have formability at which the present invention is aimed,.

The above-mentioned results have revealed that both the creep resistance strength and formability at which the present invention is aimed can be achieved by satisfying the steel components and texture according to the present invention. For the texture, it is significantly effective to satisfy not only the condition wherein "50% < the area ratio of the {111} ±15° orientation grains < 60%" and "5 < L/d < 6" which allow the texture to enhance the creep resistance strength but also the condition wherein "the area ratio of the {001} ±10° orientation grains < 5" which improve formability, and it is effective to add additional elements, B, Ga, Mg, and Ca, and carry out a hot rolled sheet annealing under the temperature range of Tr - 70 < T < Tr - 30 [°C].

INDUSTRIAL APPLICABILITY

The present invention affords a ferritic stainless steel for solid oxide fuel cells that has both electrical conductivity in the Cr-based oxide film thereof and creep resistance strength, in a long-time high temperature oxidative environment, without relying on the addition of rare earth elements. In addition, the present invention affords a high Cr type of ferritic stainless steel sheet having both creep resistance strength and formability given by controlling the texture parallel to the sheet surface at the sheet thickness central portion. Accordingly, it is possible to provide materials suitable for members in general used in a high temperature environment, including: high temperature members used for fuel cells, gas turbines, power generation systems, and the like; automobile members such as exhaust manifolds, converters, mufflers, turbochargers, EGR coolers, front pipes, and center pipes; combustion equipment such as stoves and fan heaters; pressure vessels such as pressure cookers; and the like.

**Claims**

1. A ferritic stainless steel comprising: by mass%, C: 0.030% or less, Si: 1.00% or less, Mn: 0.05 to 0.25 %, P: 0.045% or less, S: 0.0030% or less, Cr: 20.0 to 25.0%, Mo: 0.3 to 2.0%, N: 0.040% or less, Al: 0.50% or less, V: 0.20% or less, Nb: 0.001 to 0.500%, and/or Ti: 0.001 to 0.50% optionally further comprising: by mass%, one or more of Sn:

0.30% or less, Sb: 0.30% or less, Ni: 1.00% or less, Cu: 1.00% or less, W: 1.0% or less, Co: 1.00% or less, B: 0.0100% or less, Ga: 0.0100% or less, Mg: 0.0100% or less, Ca: 0.0100% or less, Zr: 0.10% or less, Y: 0.10% or less, REM: 0.10% or less, and Ta: 0.10% or less, and the steel having the balance consisting of Fe and unavoidable impurities, wherein the ferritic stainless steel further satisfies both conditions (a) and (b) or satisfies the condition (b):

(a) the ferritic stainless steel comprises one or more of B: 0.0050% or less, Ga: 0.0100% or less, Mg: 0.0100% or less, and Ca: 0.0100% or less, and satisfies Equation (1):

$$10 \, (B + Ga) + Mg + Ca > 0.010 \text{ --- Equation (1)};$$

and
(b) the ferritic stainless steel satisfies Equations (2) and (3):

$$Si \, / \, (Mn + Al + V) < 0.35 \text{ --- Equation (2)};$$

$$0.40 < Al \, / \, (Si + Mn + V) < 3.00 \text{ --- Equation (3)};$$

wherein, in Equations (1) to (3), B, Ga, Mg, Ca, Si, Mn, Al, and V each represent an amount in mass% of corresponding element thereof, and wherein when the corresponding element is not contained, 0 is substituted thereinto.

2. The ferritic stainless steel according to claim 1, comprising: by mass%, one or more of Sn: 0.30% or less, Sb: 0.30% or less, Ni: 1.00% or less, Cu: 1.00% or less, W: 1.0% or less, Co: 1.00% or less, B: 0.0100% or less, Ga: 0.0100% or less, Mg: 0.0100% or less, Ca: 0.0100% or less, Zr: 0.10% or less, Y: 0.10% or less, REM: 0.10% or less, and Ta: 0.10% or less.

3. The ferritic stainless steel according to claim 1 or 2, wherein an oxide film is formed on the surface of the ferritic stainless steel, and wherein the oxide film has a thickness of less than 2.0 $\mu$m, contains 50% or more Cr in terms of atomic %, and contains the maximum Si concentration of less than 2% in terms of atomic %, after retaining the ferritic stainless steel at 850°C for 100 hours in an air humidified so as to have a weight absolute humidity of about 2.3% at 20°C, and then cooling the ferritic stainless steel to room temperature.

4. The ferritic stainless steel according to claim 1 or 2, wherein the ferritic stainless steel comprises an oxide film having a thickness of less than 2.0 $\mu$m, and wherein the oxide film contains 50% or more Cr in terms of atomic % and contains the maximum Si concentration of less than 2% in terms of atomic %.

5. The ferritic stainless steel according to claim 1 or 2, wherein a time it takes for a creep strain thereof to reach 1% at 700°C under an initial stress of 20 MPa is 2500 hours or more in a constant load test in accordance with JIS Z 2271.

6. The ferritic stainless steel according to any one of claims 1 to 5, wherein the ferritic stainless steel is used for a solid oxide fuel cell.

7. A ferritic stainless steel sheet comprising: by mass%, C: 0.030% or less, Si: 1.00% or less, Mn: 0.05 to 0.25 %, P: 0.045% or less, S: 0.0030% or less, Cr: 20.0 to 25.0%, Mo: 0.3 to 2.0%, N: 0.040% or less, Al: 0.50% or less, V: 0.20% or less, Nb: 0.001 to 0.500%, and/or Ti: 0.001 to 0.50% optionally further comprising: by mass%, one or more of Sn: 0.30% or less, Sb: 0.30% or less, Ni: 1.00% or less, Cu: 1.00% or less, W: 1.0% or less, Co: 1.00% or less, B: 0.0100% or less, Ga: 0.0100% or less, Mg: 0.0100% or less, Ca: 0.0100% or less, Zr: 0.10% or less, Y: 0.10% or less, REM: 0.10% or less, and Ta: 0.10% or less, the steel sheet having the balance consisting of Fe and unavoidable impurities, wherein texture in the sheet thickness central portion of the ferritic stainless steel sheet satisfies both conditions (a) and (b):

(a) an area ratio of {111} ±15° orientation grains is more than 30% and less than 60%, wherein the {111} plane orientation of the {111} ±15° orientation grains has an angular difference of 15° or less from the normal direction to a plane that is parallel to the steel sheet surface at the sheet thickness central portion; and

(b) a shape of any orientation grain other than the {111} ±15° orientation grains defined in (a) satisfies Equation:

$$1.5 < L / d < 8$$

wherein L is the average length in μm of the {111} ±15° orientation grains in the rolling direction, and d is the average length in μm of the {111} ±15° orientation grains in the direction perpendicular to the rolling direction.

8. The ferritic stainless steel sheet according to claim 7, comprising: by mass%, one or more of Sn: 0.30% or less, Sb: 0.30% or less, Ni: 1.00% or less, Cu: 1.00% or less, W: 1.0% or less, Co: 1.00% or less, B: 0.0100% or less, Ga: 0.0100% or less, Mg: 0.0100% or less, Ca: 0.0100% or less, Zr: 0.10% or less, Y: 0.10% or less, REM: 0.10% or less, and Ta: 0.10% or less.

9. The ferritic stainless steel sheet according to claim 7 or 8, wherein the texture of the steel further satisfies condition (c): (c) an area ratio of {001} ±10° orientation grains is less than 10%, wherein the {001} plane orientation of the {001} ±10° orientation grains has an angular difference of 10° or less from the normal direction to a plane that is parallel to the steel sheet surface at the sheet thickness central portion.

10. The ferritic stainless steel sheet according to any one of claims 7 to 9 having excellent heat resistance and formability, wherein a time it takes for a creep strain of the ferritic stainless steel sheet to reach 1% at 750°C under an initial stress of 15 MPa is 1000 hours or more in a constant load test in accordance with JIS Z 2271.

11. The ferritic stainless steel sheet according to any one of claims 7 to 10, wherein the ferritic stainless steel sheet is used for a solid oxide fuel cell.

12. A method of producing a ferritic stainless steel material having excellent heat resistance and formability, the method comprising:

heat-treating a stainless steel comprising the composition according to any one of claims 1, 2, 7, and 8 in a range of Tr - 100 < T < Tr before cold rolling;
repeating cold rolling and heat-treatment at 1100°C or less to the stainless steel; and
carrying out finishing heat-treatment at 1000°C or more to the stainless steel; wherein Tr in °C is a recrystallization temperature of the steel, and T is a heat-treatment temperature applied prior to cold rolling.

**Patentansprüche**

1. Ein ferritischer Edelstahl, umfassend: in Massen-%, C: 0,030% oder weniger, Si: 1,00% oder weniger, Mn: 0,05 bis 0,25 %, P: 0,045% oder weniger, S: 0,0030% oder weniger, Cr: 20,0 bis 25,0%, Mo: 0,3 bis 2,0%, N: 0,040% oder weniger, Al: 0,50% oder weniger, V: 0,20% oder weniger, Nb: 0,001 bis 0,500%, und/oder Ti: 0,001 bis 0,50%, gegebenenfalls ferner umfassend: in Massen-%, eines oder mehrere aus Sn: 0,30% oder weniger, Sb: 0,30% oder weniger, Ni: 1,00% oder weniger, Cu: 1,00% oder weniger, W: 1,0% oder weniger, Co: 1,00% oder weniger, B: 0,0100% oder weniger, Ga: 0,0100% oder weniger, Mg: 0,0100% oder weniger, Ca: 0,0100% oder weniger, Zr: 0,10% oder weniger, Y: 0,10% oder weniger, REM: 0,10% oder weniger und Ta: 0,10% oder weniger, und wobei der Stahl einen Rest bestehend aus Fe und unvermeidbaren Verunreinigungen aufweist, wobei der ferritische Edelstahl ferner beide Bedingungen (a) und (b) erfüllt oder die Bedingung (b) erfüllt:

(a) der ferritische Edelstahl eines oder mehrere umfasst aus B: 0,0050% oder weniger, Ga: 0,0100% oder weniger, Mg: 0,0100% oder weniger und Ca: 0.0100% oder weniger und die Gleichung (1) erfüllt:

$$10\,(B + Ga) + Mg + Ca > 0{,}010 \text{ --- Gleichung (1)};$$

und
(b) der ferritische Edelstahl die Gleichungen (2) und (3) erfüllt:

$$Si / (Mn + Al + V) < 0,35 \text{ --- Gleichung (2);}$$

$$0,40 < Al / (Si + Mn + V) < 3,00 \text{ --- Gleichung (3);}$$

wobei in den Gleichungen (1) bis (3) B, Ga, Mg, Ca, Si, Mn, Al und V jeweils eine Menge des entsprechenden Elements davon in Massen-% darstellen, und wobei, wenn das entsprechende Element nicht enthalten ist, 0 darin substituiert ist.

2. Der ferritische Edelstahl nach Anspruch 1, umfassend: in Massen-%, eines oder mehrere aus Sn: 0,30% oder weniger, Sb: 0,30% oder weniger, Ni: 1,00% oder weniger, Cu: 1,00% oder weniger, W: 1,0% oder weniger, Co: 1,00% oder weniger, B: 0,0100% oder weniger, Ga: 0,0100% oder weniger, Mg: 0,0100% oder weniger, Ca: 0,0100% oder weniger, Zr: 0,10% oder weniger, Y: 0,10% oder weniger, REM: 0,10% oder weniger und Ta: 0,10% oder weniger.

3. Der ferritische Edelstahl nach Anspruch 1 oder 2, wobei ein Oxidfilm auf der Oberfläche des ferritischen Edelstahls gebildet ist und wobei der Oxidfilm eine Dicke von weniger als 2,0 $\mu$m aufweist, 50% oder mehr Cr, bezogen auf Atom-%, enthält und eine maximale Konzentration an Si von weniger als 2%, bezogen auf Atom-%, enthält, nachdem der ferritische Edelstahl bei 850°C für 100 Stunden in einer Luft gehalten wurde, die so befeuchtet ist, dass sie eine gewichtsbezogene absolute Feuchtigkeit bei 20°C von etwa 2,3% aufweist und anschließend der ferritische Edelstahl auf Raumtemperatur abgekühlt wurde.

4. Der ferritische Edelstahl nach Anspruch 1 oder 2, wobei der ferritische Edelstahl einen Oxidfilm mit einer Dicke von weniger als 2,0 $\mu$m umfasst und wobei der Oxidfilm 50% oder mehr Cr, bezogen auf Atom-%, enthält und eine maximale Si-Konzentration von weniger als 2%, bezogen auf Atom-%, enthält.

5. Der ferritische Edelstahl nach Anspruch 1 oder 2, wobei eine Zeit, die benötigt wird, bis eine Kriechdehnung davon bei 700°C bei einer anfänglichen Belastung von 20 MPa in einem Dauerbelastungstest gemäß JIS Z 2271 1% erreicht, 2500 Stunden oder mehr beträgt.

6. Der ferritische Edelstahl nach einem der Ansprüche 1 bis 5, wobei der ferritische Edelstahl für eine Festoxid-Brennstoffzelle verwendet wird.

7. Ein ferritisches Edelstahlblech, umfassend: in Massen-%, C: 0,030% oder weniger, Si: 1,00% oder weniger, Mn: 0,05 bis 0,25 %, P: 0,045% oder weniger, S: 0,0030% oder weniger, Cr: 20,0 bis 25,0%, Mo: 0,3 bis 2,0%, N: 0,040% oder weniger, Al: 0,50% oder weniger, V: 0,20% oder weniger, Nb: 0,001 bis 0,500% und/oder Ti: 0,001 bis 0,50%, gegebenenfalls ferner umfassend: in Massen-%, eines oder mehrere aus Sn: 0,30% oder weniger, Sb: 0,30% oder weniger, Ni: 1,00% oder weniger, Cu: 1,00% oder weniger, W: 1,0% oder weniger, Co: 1,00% oder weniger, B: 0,0100% oder weniger, Ga: 0,0100% oder weniger, Mg: 0,0100% oder weniger, Ca: 0,0100% oder weniger, Zr: 0,10% oder weniger, Y: 0,10% oder weniger, REM: 0,10% oder weniger und Ta: 0,10% oder weniger, wobei das Stahlblech einen Rest bestehend aus Fe und unvermeidbaren Verunreinigungen aufweist, wobei die Textur im Zentralteil der Blechdicke des ferritischen Edelstahlblechs beide Bedingungen (a) und (b) erfüllt:

(a) ein Flächenverhältnis von {111} ±15° Orientierungskörnern mehr als 30% und weniger als 60% beträgt, wobei die {111}-Ebenenorientierung der {111} ±15°Orientierungskörner einen Winkelunterscheid von 15° oder weniger von der normalen Richtung zu einer Ebene, die am Zentralteil der Blechdicke parallel zur Stahlblechoberfläche verläuft, aufweist; und
(b) eine Form eines jeden Orientierungskorns, das sich von den in (a) definierten {111} ±15° Orientierungskörnern unterscheidet, die Gleichung erfüllt:

$$1,5 < L / d < 8$$

wobei L für die durchschnittliche Länge in $\mu$m der {111}±15° Orientierungskörner in Walzrichtung steht, und d für die durchschnittliche Länge in $\mu$m der {111} ±15° Orientierungskörner in der Richtung, die senkrecht zur Walzrichtung verläuft, steht.

8. Das ferritische Edelstahlblech nach Anspruch 7, umfassend: in Massen-%, eines oder mehrere aus Sn: 0,30% oder weniger, Sb: 0,30% oder weniger, Ni: 1,00% oder weniger, Cu: 1,00% oder weniger, W: 1,0% oder weniger, Co: 1,00% oder weniger, B: 0,0100% oder weniger, Ga: 0,0100% oder weniger, Mg: 0,0100% oder weniger, Ca: 0,0100% oder weniger, Zr: 0,10% oder weniger, Y: 0,10% oder weniger, REM: 0,10% oder weniger und Ta: 0,10% oder weniger.

9. Das ferritische Edelstahlblech nach Anspruch 7 oder 8, wobei die Textur des Stahls ferner Bedingung (c) erfüllt: (c) ein Flächenverhältnis von {001} ±10° Orientierungskörnern weniger als 10% beträgt, wobei die {001}-Ebenenorientierung der {001} ±10° Orientierungskörner einen Winkelunterschied von 10° oder weniger von der normalen Richtung zu einer Ebene, die am Zentralteil der Blechdicke parallel zur Stahlblechoberfläche verläuft, aufweist.

10. Das ferritische Edelstahlblech nach einem der Ansprüche 7 bis 9 mit hervorragender Wärmebeständigkeit und Formbarkeit, wobei eine Zeit, die benötigt wird, bis eine Kriechdehnung des ferritischen Edelstahlblechs bei 750°C bei einer anfänglichen Belastung von 15 MPa in einem Dauerbelastungstest gemäß JIS Z 2271 1% erreicht, 1000 Stunden oder mehr beträgt.

11. Das ferritische Edelstahlblech nach einem der Ansprüche 7 bis 10, wobei das ferritische Edelstahlblech für eine Festoxid-Brennstoffzelle verwendet wird.

12. Ein Verfahren zur Herstellung eines ferritischen Edelstahlmaterials mit hervorragender Wärmebeständigkeit und Formbarkeit, wobei das Verfahren umfasst:

Wärmebehandeln eines Edelstahls, umfassend die Zusammensetzung nach einem der Ansprüche 1, 2, 7 und 8 in einem Bereich von Tr - 100 < T < Tr vor dem Kaltwalzen;
Wiederholen des Kaltwalzens und der Wärmebehandlung des Edelstahls bei 1100°C oder weniger; und
Durchführen einer abschließenden Wärmebehandlung des Edelstahls bei 1000°C oder mehr;
wobei Tr für eine Rekristallisationstemperatur des Stahls in °C steht und T für eine Wärmebehandlungstemperatur, die vor dem Kaltwalzen angewandt wird, steht.

## Revendications

1. Acier inoxydable ferritique comprenant: en % en masse, C : 0,030 % ou moins, Si : 1,00 % ou moins, Mn : 0,05 à 0,25 %, P : 0,045 % ou moins, S : 0,0030 % ou moins, Cr : 20,0 à 25,0 %, Mo : 0,3 à 2,0 %, N : 0,040 % ou moins, Al : 0,50 % ou moins, V : 0,20 % ou moins, Nb : 0,001 à 0,500 %, et/ou Ti : 0,001 à 0,50 %, comprenant éventuellement en outre : en % en masse, un ou plusieurs parmi Sn : 0,30 % ou moins, Sb : 0,30 % ou moins, Ni : 1,00 % ou moins, Cu : 1,00 % ou moins, W : 1,0 % ou moins, Co : 1,00 % ou moins, B : 0,0100 % ou moins, Ga : 0,0100 % ou moins, Mg : 0,0100 % ou moins, Ca : 0,0100 % ou moins, Zr : 0,10 % ou moins, Y : 0,10 % ou moins, REM (éléments des terres rares) : 0,10 % ou moins, et Ta : 0,10 % ou moins, le reste de l'acier étant constitué de Fe et d'impuretés inévitables, dans lequel l'acier inoxydable ferritique satisfait en outre aux deux conditions (a) et (b) ou satisfait à la condition (b) :

(a) l'acier inoxydable ferritique comprend un ou plusieurs parmi B : 0,0050 % ou moins, Ga : 0,0100 % ou moins, Mg : 0,0100 % ou moins, et Ca : 0,0100 % ou moins, et satisfait à l'équation (1) :

$$10 (B + Ga) + Mg + Ca > 0,010 \text{ --- équation (1)} ;$$

et
(b) l'acier inoxydable ferritique satisfait aux équations (2) et (3) :

$$Si / (Mn + Al + V) < 0,35 \text{ --- équation (2)} ;$$

$$0,40 < Al / (Si + Mn + V) < 3,00 \text{ --- équation (3)} ;$$

dans lequel, dans les équations (1) à (3), chacun de B, Ga, Mg, Ca, Si, Mn, Al et V représente une quantité en % en masse de l'élément correspondant à celui-ci, et dans lequel, quand l'élément correspondant n'est pas contenu, il est remplacé par 0.

2. Acier inoxydable ferritique selon la revendication 1, comprenant : en % en masse, un ou plusieurs parmi Sn : 0,30 % ou moins, Sb : 0,30 % ou moins, Ni : 1,00 % ou moins, Cu : 1,00 % ou moins, W : 1,0 % ou moins, Co : 1,00 % ou moins, B : 0,0100 % ou moins, Ga : 0,0100 % ou moins, Mg : 0,0100 % ou moins, Ca : 0,0100 % ou moins, Zr : 0,10 % ou moins, Y : 0,10 % ou moins, REM : 0,10 % ou moins, et Ta : 0,10 % ou moins.

3. Acier inoxydable ferritique selon la revendication 1 ou 2, dans lequel un film d'oxyde est formé sur la surface de l'acier inoxydable ferritique, et dans lequel le film d'oxyde a une épaisseur inférieure à 2,0 µm, contient 50 % ou plus de Cr en termes de % atomiques, et contient une concentration maximale de Si inférieure à 2 % en termes de % atomiques, après maintien de l'acier inoxydable ferritique à 850 °C pendant 100 heures dans de l'air humidifié de façon à avoir une humidité absolue en poids d'environ 2,3 % à 20 °C, et ensuite refroidissement à la température ambiante de l'acier inoxydable ferritique.

4. Acier inoxydable ferritique selon la revendication 1 ou 2, lequel acier inoxydable ferritique comprend un film d'oxyde ayant une épaisseur inférieure à 2,0 µm, et dans lequel le film d'oxyde contient 50 % ou plus de Cr en termes de % atomiques, et contient une concentration maximale de Si inférieure à 2 % en termes de % atomiques.

5. Acier inoxydable ferritique selon la revendication 1 ou 2, dans lequel le temps nécessaire pour que sa déformation de fluage atteigne 1 % à 700 °C sous une contrainte initiale de 20 MPa est de 2500 heures ou plus dans un test sous charge constante conformément à la norme JIS Z 2271.

6. Acier inoxydable ferritique selon l'une quelconque des revendications 1 à 5, dans lequel l'acier inoxydable ferritique est utilisé pour une pile à combustible du type à oxyde solide.

7. Tôle d'acier inoxydable ferritique comprenant : en % en masse, C : 0,030 % ou moins, Si : 1,00 % ou moins, Mn : 0,05 à 0,25 %, P : 0,045 % ou moins, S : 0,0030 % ou moins, Cr : 20,0 à 25,0 %, Mo : 0,3 à 2,0 %, N : 0,040 % ou moins, Al : 0,50 % ou moins, V : 0,20 % ou moins, Nb : 0,001 à 0,500 %, et/ou Ti : 0,001 à 0,50 %, comprenant éventuellement en outre : en % en masse, un ou plusieurs parmi Sn : 0,30 % ou moins, Sb : 0,30 % ou moins, Ni : 1,00 % ou moins, Cu : 1,00 % ou moins, W : 1,0 % ou moins, Co : 1,00 % ou moins, B : 0,0100 % ou moins, Ga : 0,0100 % ou moins, Mg : 0,0100 % ou moins, Ca : 0,0100 % ou moins, Zr : 0,10 % ou moins, Y : 0,10 % ou moins, REM :

0,10 % ou moins, et Ta : 0,10 % ou moins, le reste de l'acier étant constitué de Fe et d'impuretés inévitables, dans laquelle la texture de la partie centrale de l'épaisseur de tôle de la tôle d'acier inoxydable ferritique satisfait aux deux conditions (a) et (b) :

(a) une proportion surfacique des grains à orientation {111} ± 15° est supérieure à 30 % et inférieure à 60 %, dans laquelle l'orientation dans le plan {111} des grains à orientation {111} ± 15° a une différence angulaire de 15° ou moins par rapport à la direction normale à un plan qui est parallèle à la surface de la tôle d'acier au niveau de la partie centrale de l'épaisseur de la tôle d'acier ; et
(b) une forme d'un quelconque grain à orientation autre que les grains à orientation {111} ± 15° définis en (a) satisfait à l'équation :

$$1,5 < L / d < 8$$

dans laquelle L est la longueur moyenne en µm des grains à orientation {111} ± 15° dans la direction de laminage, et d est la longueur moyenne en µm des grains à orientation {111} ± 15° dans la direction perpendiculaire à la direction de laminage.

8. Tôle d'acier inoxydable ferritique selon la revendication 7, comprenant : en % en masse, un ou plusieurs parmi Sn : 0,30 % ou moins, Sb : 0,30 % ou moins, Ni : 1,00 % ou moins, Cu : 1,00 % ou moins, W : 1,0 % ou moins, Co : 1,00 % ou moins, B : 0,0100 % ou moins, Ga : 0,0100 % ou moins, Mg : 0,0100 % ou moins, Ca : 0,0100 % ou moins, Zr : 0,10 % ou moins, Y : 0,10 % ou moins, REM : 0,10 % ou moins, et Ta : 0,10 % ou moins.

9. Tôle d'acier inoxydable ferritique selon la revendication 7 ou 8, dans laquelle la texture de l'acier satisfait en outre à la condition (c) :

(c) une proportion surfacique des grains à orientation {001} ± 10° est inférieure à 10 %, dans laquelle l'orientation dans le plan {001} des grains à orientation {001} ± 10° a une différence angulaire de 10° ou moins par rapport à la direction normale à un plan qui est parallèle à la surface de la tôle d'acier au niveau de la partie centrale de l'épaisseur de la tôle d'acier.

10. Tôle d'acier inoxydable ferritique selon l'une quelconque des revendications 7 à 9, ayant d'excellentes caractéristiques de résistance à la chaleur et d'usinabilité, dans laquelle le temps nécessaire pour que la déformation de fluage de la tôle d'acier inoxydable ferritique atteigne 1 % à 750 °C sous une contrainte initiale de 15 MPa est de 1000 heures ou plus dans un test sous charge constante conformément à la norme JIS Z 2271.

11. Tôle d'acier inoxydable ferritique selon l'une quelconque des revendications 7 à 10, dans laquelle la tôle d'acier inoxydable ferritique est utilisée pour une pile à combustible du type à oxyde solide.

12. Méthode de production d'un matériau en acier inoxydable ferritique ayant d'excellentes caractéristiques de résistance à la chaleur et d'usinabilité, la méthode comprenant

le traitement à la chaleur d'un acier inoxydable comprenant la composition selon l'une quelconque des revendications 1, 2, 7 et 8 dans la plage Tr — 100 < T < Tr avant laminage à froid ;
la répétition du laminage à froid et du traitement à la chaleur à 1100 °C ou moins sur l'acier inoxydable ; et
la mise en œuvre d'un traitement à la chaleur de finition à 1000 °C ou plus sur l'acier inoxydable ;
dans laquelle Tr en °C est la température de recristallisation de l'acier, et T est la température de traitement à la chaleur appliquée avant le laminage à froid.

# FIG. 1

CRYSTAL ORIENTATION MAP OF {111}±15° ORIENTATION GRAINS
PLANE PARALLEL TO SHEET SURFACE AT SHEET THICKNESS CENTRAL PORTION
BLACK REGION: {111}±15° ORIENTATION GRAINS;AREA RATIO:49.3%
WHITE REGION:ORIENTATION GRAINS OTHER THAN {111}±15° ORIENTATION GRAINS;L/D:3.3

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 4310723 B
- JP 4737600 B
- JP 4385328 B
- JP 4675066 B
- JP 5716054 B
- JP 4166657 B
- JP 5377613 B

- JP 2010280989 A
- JP H9263900 A
- WO 2015108072 A
- JP 6053994 B
- JP 2011179063 A
- WO 2015064739 A